(19) Europäisches Patentamt
European Patent Office
Office européen des brevets

(11) **EP 3 287 879 A1**

(12) **EUROPEAN PATENT APPLICATION**
published in accordance with Art. 153(4) EPC

(43) Date of publication:
**28.02.2018 Bulletin 2018/09**

(21) Application number: **16783187.4**

(22) Date of filing: **20.04.2016**

(51) Int Cl.:
***G06F 3/042*** *(2006.01)*

(86) International application number:
**PCT/JP2016/062505**

(87) International publication number:
**WO 2016/171166 (27.10.2016 Gazette 2016/43)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **20.04.2015 JP 2015085954**
**19.04.2016 JP 2016083906**

(71) Applicant: **Ricoh Company, Ltd.**
**Tokyo 143-8555 (JP)**

(72) Inventors:
- **YAMAMOTO, Seiko**
  **Tokyo 143-8555 (JP)**
- **YAMAGATA, Masanobu**
  **Tokyo 143-8555 (JP)**
- **ISHIKAWA, Naoyuki**
  **Tokyo 143-8555 (JP)**

(74) Representative: **Schwabe - Sandmair - Marx**
**Patentanwälte Rechtsanwalt**
**Partnerschaft mbB**
**Joseph-Wild-Straße 20**
**81829 München (DE)**

# (54) COORDINATE DETECTION DEVICE, ELECTRONIC BLACKBOARD, IMAGE DISPLAY SYSTEM, AND COORDINATE DETECTION METHOD

(57) A coordinate detection apparatus 24 for detecting coordinates of a light-emitting pointer 100 and a non-light-emitting pointer 200 on a display surface 22, includes an imaging unit 410 configured to capture an image of at least one of the light-emitting pointer and the non-light-emitting pointer in a predetermined range from the display surface; and a detection unit 350 configured to detect a quantity of light generated by the light-emitting pointer emitting light in the predetermined range so as to detect the coordinates of the light-emitting pointer, and to detect a quantity of light emitted on the display surface and cut off by the non-light-emitting pointer in the predetermined range so as to detect the coordinates of the non-light-emitting pointer.

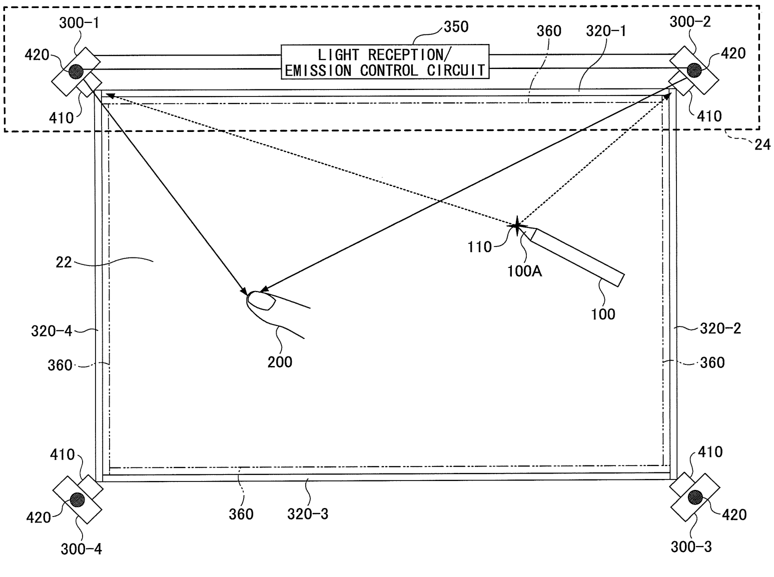


FIG.5

EP 3 287 879 A1

Printed by Jouve, 75001 PARIS (FR)

## Description

[Technical Field]

The present invention relates to a coordinate detection apparatus, an electronic blackboard, an image display system, and a coordinate detection method.

[Background Art]

Electronic blackboards have been widely used that include a display of a liquid crystal panel or the like, a coordinate detection apparatus to detect coordinates on the display pointed by a user using a pointer such as an electronic pen, and a control unit to draw and display various images based on coordinate data output from the coordinate detection apparatus.

As a coordinate detection apparatus used for such an electronic blackboard, various methods of detecting coordinates have been proposed. Also, there has been demand for drawing various images by either of a light-emitting pointer equipped with a light emitting part, or a non-light-emitting pointer such as a finger.

To cope with such demand, a coordinate detection apparatus has been devised that detects coordinates of multiple pointers (see, for example, Patent document 1). Patent document 1 discloses a coordinate detection apparatus that causes propagation light rays having different wavelengths from each other to be incident on a light-guiding plate when a light-emitting pointer contacts the surface of the light-guiding plate, and extracts the propagation light rays having the different wavelengths by filters, respectively. Furthermore, the coordinate detection apparatus in Patent document 1 detects dispersion light of a light source emitted along the light-guiding plate dispersed by a non-light-emitting pointer (a finger) so as to detect the coordinates of the non-light-emitting pointer. Therefore, the coordinates of both the light-emitting pointer and the non-light-emitting pointer can be detected.

[Related-Art Documents]

[Patent Documents]

[Patent Document 1] Japanese Unexamined Patent Application Publication No. 2013-175142

[Summary of the Invention]

[Problem to be Solved by the Invention]

However, the coordinate detection apparatus disclosed in the Patent document 1 has a problem in that a light-guiding plate is required on the surface of the display. The necessity of a light-guiding plate on the surface of the display tends to generate a parallax between a contact position of the pointer and the display position on the image display unit (a difference that is generated between the position pointed by the user, and the drawing position of an image), to the extent of the thickness of the light-guiding plate. In addition, installing a coordinate detection apparatus that includes a light-guiding plate on an ordinary display tends to increase the manufacturing cost, which may increase the overall cost.

In view of the above, it is an object of an embodiment of the present invention to provide a coordinate detection apparatus that can detect coordinates of a light-emitting pointer and a non-light-emitting pointer.

[Means to Solve the Problem]

In view of the above problem, according to an embodiment, a coordinate detection apparatus for detecting coordinates of a light-emitting pointer and a non-light-emitting pointer on a display surface, includes an imaging unit configured to capture an image of at least one of the light-emitting pointer and the non-light-emitting pointer in a predetermined range from the display surface; and a detection unit configured to detect a quantity of light generated by the light-emitting pointer emitting light in the predetermined range so as to detect the coordinates of the light-emitting pointer, and to detect a quantity of light that is emitted on the display surface and is cut off by the non-light-emitting pointer in the predetermined range so as to detect the coordinates of the non-light-emitting pointer.

[Effects of the Invention]

It is possible to provide a coordinate detection apparatus that can detect coordinates of a light-emitting pointer and a non-light-emitting pointer.

[Brief Description of the Drawings]

FIG. 1A is an example of a diagram illustrating an overview of a detection method of coordinates of a light-emitting pointer or coordinates of a non-light-emitting pointer;
FIG. 1B is an example of a diagram illustrating an overview of a detection method of coordinates of a light-emitting pointer or coordinates of a non-light-emitting pointer;
FIG. 2 is an example of a perspective view illustrating an example of an appearance of an electronic blackboard;
FIG. 3 is an example of a configuration diagram illustrating a hardware configuration of an electronic blackboard;
FIG. 4 is an example of a hardware configuration diagram of a light-emitting pointer;
FIG. 5 is an example of a schematic view illustrating a configuration of a coordinate detection apparatus;
FIG. 6 is an example of a perspective view of a light reception/emission device;
FIG. 7 is an example of a diagram schematically illustrating a system configuration example including an electronic blackboard;
FIG. 8 is an example of a block diagram illustrating a control system of an electronic blackboard;
FIG. 9 is an example of a block diagram illustrating a hardware configuration of a coordinate detection apparatus of an electronic blackboard;
FIG. 10 is an example of a functional block diagram of a controller included in an electronic blackboard;
FIG. 11 is an example of a diagram illustrating calculation of a position of a light-emitting pointer having a light-emitting element installed;
FIG. 12A is a diagram schematically illustrating a quantity of light sensed by a light reception sensor such as a light reception/emission device 300-1 or 300-2;
FIG. 12B is a diagram schematically illustrating a quantity of light sensed by a light reception sensor such as a light reception/emission device 300-1 or 300-2;
FIG. 13 is an example of a flowchart illustrating steps by which a light reception/emission control circuit detects coordinates of a light-emitting pointer;
FIG. 14 is an example of a diagram illustrating detection of a position of a non-light-emitting pointer not having a light-emitting element installed, such as a finger;
FIG. 15A is a diagram schematically illustrating a quantity of light sensed by a light reception sensor such as a light reception/emission device 300-1 or 300-2;
FIG. 15B is a diagram schematically illustrating a quantity of light sensed by a light reception sensor such as a light reception/emission device 300-1 or 300-2;
FIG. 16 is an example of a flowchart illustrating steps by which a light reception/emission control circuit detects coordinates of a non-light-emitting pointer;
FIG. 17 is an example of a schematic perspective view of a light reception/emission device (second embodiment);
FIG. 18A is a diagram schematically illustrating an example of a quantity of light detected by a light reception/emission device 300-1 or 300-2;
FIG. 18B is a diagram schematically illustrating an example of a quantity of light detected by a light reception/emission device 300-1 or 300-2;
FIG. 18C is a diagram schematically illustrating an example of a quantity of light detected by a light reception/emission device 300-1 or 300-2;
FIG. 18D is a diagram schematically illustrating an example of a quantity of light detected by a light reception/emission device 300-1 or 300-2;
FIG. 19 is an example of a flowchart illustrating operational steps of a coordinate detection apparatus (second embodiment);
FIG. 20 is a diagram illustrating an example of a light-emitting pointer distant from a light reception sensor;
FIG. 21A is an example of a diagram illustrating a quantity of light detected by a light reception sensor of a light reception/emission device in a state illustrated in FIG. 20;
FIG. 21B is an example of a diagram illustrating a quantity of light detected by a light reception sensor of a light reception/emission device in a state illustrated in FIG. 20;
FIG. 22A is a diagram illustrating an example of a light reception/emission device of a coordinate detection apparatus (third embodiment);
FIG. 22B is a diagram illustrating an example of a light reception/emission device of a coordinate detection apparatus (third embodiment);
FIG. 22C includes diagrams illustrating an example of a light reception/emission device of a coordinate detection apparatus (third embodiment);
FIG. 23 is an example of a flowchart illustrating operational steps of a coordinate detection apparatus (third embodiment);

FIG. 24 is an example of a schematic configuration diagram of a coordinate detection system that includes a projector and a coordinate detection apparatus;

FIG. 25 includes diagrams schematically illustrating an extension process of retroreflector plates integrated with a coordinate detection apparatus;

FIG. 26 is an example of a diagram schematically illustrating a system configuration example of a coordinate detection system;

FIG. 27 is an example of a schematic configuration diagram illustrating operational steps of a coordinate detection system in a case where a light-emitting pointer emits light; and

FIG. 28 is an example of a schematic configuration diagram illustrating operational steps of a coordinate detection system in a case where a non-light-emitting pointer cuts off infrared light.

[Mode for Carrying out of the Invention]

In the following, embodiments of the present invention will be described with reference to the drawings.

(First embodiment)

FIGs. 1A and 1B are examples of diagrams illustrating overviews of detection methods of coordinates of a light-emitting pointer, and coordinates of a non-light-emitting pointer 200, respectively. FIG. 1A is a diagram illustrating a detection method of coordinates of the non-light-emitting pointer 200. In principle, a coordinate detection apparatus 24 causes a light emitter 420 to constantly emit light, and infrared light emitted from the light emitter 420 is reflected by retroreflector plates and sensed by light reception sensors 410. If the user brings the tip of the non-light-emitting pointer 200 (such as a finger) close to a display surface 22 of an image display unit 20, the light reception sensors 410 at the upper left corner and the upper right corner detect the non-light-emitting pointer 200 as a dark spot, respectively. A light reception/emission control circuit 350 obtains angles $\theta_3$ (a third position) and $\theta_4$ (a fourth position) from the position of the dark spot in each of the light reception sensors 410, to calculate coordinates (x2, y2) of the non-light-emitting pointer 200 by the principle of triangulation.

FIG. 1B is a diagram illustrating a detection method of coordinates of a light-emitting pointer. A light-emitting pointer 100 can wirelessly communicate with the coordinate detection apparatus 24, and if the user makes the tip of the light-emitting pointer 100 approach the display surface 22, and further contact the display surface 22 (or press against it), transmits a signal representing that a pen pressure has been detected (referred to as a "writing detection signal", below) to the coordinate detection apparatus 24. The coordinate detection apparatus 24 exceptionally turns off the light emitter 420 until receiving a signal representing that the tip of the light-emitting pointer 100 is separated from the display surface 22 (referred to as a "writing completion signal", below), or while receiving the writing detection signal. Besides, when the user makes the tip of the light-emitting pointer 100 contact the image display unit 20, the tip of the light-emitting pointer 100 emits light. The light reception sensors 410 at the upper left corner and the upper right corner detect the light-emitting pointer 100 as a bright spot, respectively. The light reception/emission control circuit 350 obtains angles $\theta_1$ (a first position) and $\theta_2$ (a second position) from the position of the bright spot in each of the light reception sensors 410, to calculate coordinates (x1, y1) of the light-emitting pointer 100 by the principle of triangulation.

In this way, even if no light-guiding plate is provided in the image display unit 20, the coordinate detection apparatus in the embodiment can distinguish and detect the coordinates of the light-emitting pointer 100 and the non-light-emitting pointer 200. In addition, no necessity of a light-guiding plate can prevent a cost increase, and makes it possible to display an image with little or no parallax occurring. Note that even if the image display unit 20 is equipped with a light-guiding plate, the coordinate detection method in the embodiment can be applied effectively.

<Terms>

Information displayed on a display surface simply needs to be information that can be visually recognized, specifically, a character, a figure, a still picture, a video, and the like. Besides, the information may be provided by handwriting, or may be saved in advance.

Detecting coordinates means obtaining coordinates. A process for obtaining coordinates is not specifically limited, and may include sensing (detecting) by a sensor, calculation, and transformation during the course of the obtaining.

<Configuration>

FIG. 2 is a perspective view illustrating an example of an appearance of an electronic blackboard 10 in the embodiment. The electronic blackboard 10 includes an image display unit 20 as a display, a holding member 40 to hold this image display unit 20 at an appropriate height, and a device housing part 50 that houses a device or the like to control the image display unit 20. Note that if the device can be contained in a bezel part 360 or the like, the device housing part 50 may be omitted.

The image display unit 20 includes a panel member such as a liquid crystal panel or a plasma panel. Also, a surface of the image display unit 20 on which an image is displayed is referred to as a display surface 22, and the coordinate detection apparatus 24 that functions as a touch panel is placed in the surroundings of the display surface 22.

Furthermore, on the electronic blackboard 10, the user can write a character, a figure, and the like on the display surface 22 of the image display unit 20 by a light-emitting pointer 100, which is a dedicated, pen-shaped input unit. The light-emitting pointer 100 is provided with a contact detection part 102 at a pen point 100A, which will be described later, and if the pen point 100A contacts the display surface 22 of the image display unit 20, the light-emitting pointer 100 emits light, and at the same time, wirelessly transmits a writing detection signal. Accordingly, the coordinate detection apparatus 24 detects the coordinates of the light-emitting pointer 100, and the image display unit 20 displays a dot at the detected coordinates. If the pen point 100A is moved while contacting the display surface 22, the electronic blackboard 10 displays an image such as a character and a figure, by connecting and drawing multiple dots.

Also, the back end switch 105 is installed at a pen bottom 100B of the light-emitting pointer 100, and if the pen bottom 100B contacts the display surface 22 of the image display unit 20, the light-emitting pointer 100 transmits an erasure detection signal to the image display unit 20. In response to receiving an erasure detection signal transmitted from the light-emitting pointer 100, the image display unit 20 erases an image, such as a character and a figure, written on the coordinates detected by the coordinate detection apparatus 24, from the display surface 22 of the image display unit 20. Note that as a display process for this erasure operation, a controller 60 as a display control unit, which will be described later, executes a process of setting the detected coordinate position to have the same color (for example, white) as set to the background of the image displayed on the display surface 22 of the image display unit 20.

Furthermore, the light-emitting pointer 100 has a booster circuit embedded between a driving battery and the light-emitting element, to control the quantity of light emitted by the light-emitting element to be constant at all the time. If the remaining battery capacity becomes less than or equal to a default value, the light-emitting pointer 100 causes the light-emitting element to stop emitting the light. Also, the contact detection part 102 of the light-emitting pointer 100 detects a contact force on the display surface 22, when the pen point 100A contacts the display surface 22 of the image display unit 20. For example, the contact detection part 102 may change the intensity of light of the light-emitting element, based on a detected value of the contact force. Depending on this intensity of the light output from the light-emitting element of the light-emitting pointer 100, the controller 60 changes the thickness of lines of characters or figures written on the display surface 22 of the image display unit 20. Alternatively, a detected value of a pressure-sensitive sensor may be wirelessly transmitted to the coordinate detection apparatus 24.

The device housing part 50 houses various peripherals, for example, a controller, a printer, and a video disk device, as will be described later. Besides, an input unit 30, which may be a keyboard to execute input operations, is installed on the upper surface of the device housing part 50.

FIG. 3 is a configuration diagram illustrating a hardware configuration of the electronic blackboard 10. As illustrated in FIG. 3, in addition to the image display unit 20, the coordinate detection apparatus 24, and the input unit 30 described above, the electronic blackboard 10 includes a CPU (Central Processing Unit) 501, a ROM (Read-Only Memory) 502, a RAM (Random Access Memory) 503, an HDD (Hard Disk Drive) 504, an HDC (Hard Disk Controller) 505, a media drive 507, an interface (I/F) 508, a mouse 509, a microphone 510, a speaker 511, a short-distance wireless communication unit 515, a GPU (Graphics Processing Unit) 512, and an extended bus line 520 that connects these units by address lines or data lines.

The CPU 501 controls overall operations of the electronic blackboard 10. The R0M 502 stores a program used for operations of the CPU 501, such as an IPL (Initial Program Loader). The ROM 502 is used as a work area of the CPU 501. The HDD 504 stores various data items such as a program. The HDC 505 controls read and write of various data items on the HDD 504 under control of the CPU 501. The media drive 507 controls read and write (storing) of data on a recording medium 506, such as a flash memory. The interface 508 transmits data via a communication network, and connects a dongle used for preventing unauthorized use of software. The GPU 512 is connected to a ROM 513 that stores a program used for operations of the GPU 512, and a RAM 514 that is used as a work area of the GPU 512. The short-distance wireless communication unit 515 is a communication unit for wirelessly communicating mainly with the light-emitting pointer 100. Specifically, communication is executed by a communication protocol such as Bluetooth (registered trademark), Bluetooth (registered trademark) Low Energy, and ZigBee (registered trademark). The extended bus line 520 is provided with an address bus, a data bus or the like for electrically connecting the components described above.

FIG. 4 illustrates an example of a hardware configuration diagram of the light-emitting pointer. The light-emitting pointer 100 includes a light-emitting element 110 that emits infrared light by an LED or the like installed at the pen point 100A. The pen point 100A is movable or deformable in the axis direction of the light-emitting pointer 100, and a pen pressure generated when the pen point 100A contacts the display surface 22 is detected by the contact detection part 102.

The light-emitting pointer 100 also includes a wireless communication unit 103 that wirelessly communicates with the coordinate detection apparatus 24, and the wireless communication unit 103 transmits a writing detection signal to the coordinate detection apparatus 24. The pen bottom 100B of the light-emitting pointer 100 is also movable or deformable in the axis direction, and if the pen bottom 100B contacts the display surface 22, the back end switch 105 detects the contact.

The light-emitting pointer 100 also includes a CPU 106 that controls the entire light-emitting pointer 100, a RAM 107, a ROM 108, and an A/D converter 109. The ROM 108 stores a program of the light-emitting pointer 100, and the CPU 106 runs the program for the electronic pen, to provide functions as will be described in the following. Note that in addition to the illustrated components, the light-emitting pointer 100 includes generic components included in an information processing apparatus such as a microcomputer. Furthermore, the light-emitting pointer 100 may be implemented with other hardware components such as an ASIC and an FPGA.

The contact detection part 102 includes a high polymer pressure film or the like, and a pen pressure detected by the contact detection part 102 is transmitted to the A/D converter 109. The A/D converter 109 converts an analog signal representing a pen pressure into a digital signal representing the pen pressure information. The CPU 106 compares a pen pressure with a threshold, and can detect that the pen point 100A has contacted the display surface 22 (the CPU 106 generates a writing detection signal), and has been separated from the display surface 22 (in this case, the CPU 106 generates a writing completion signal). The CPU 106 causes the light-emitting element 110 to emit light if the pen point 100A contacts the display surface 22, and causes the light-emitting element 110 to turn off the light if the pen point 100A is separated from the display surface 22. This can reduce power consumption. Note that to "turn off" includes to make the quantity of light so weak that the light reception sensor 410 cannot detect the light.

Alternatively, the light-emitting element 110 may be always turned on. In this case, a sensor such as an acceleration sensor may be installed for estimating a use state of the user so that the CPU 106 determines whether the user is using the light-emitting pointer 100 based on the output of the sensor, and if not using, turns off the light.

If the pen bottom 100B comes into contact with the display surface 22, the back end switch 105 is turned on, and the CPU 106 detects a back-end-on signal. On the other hand, if the pen bottom 100B becomes separated from the display surface 22, the back end switch 105 is turned off, and the CPU 106 detects a back-end-off signal.

Furthermore, it is preferable for the light-emitting pointer 100 to store attribute information including a specific ID and the like in the ROM 108 or the like. Accordingly, even if there are multiple light-emitting pointers 100, the coordinate detection apparatus 24 can identify a light-emitting pointer 100 that corresponds to a writing detection signal. For example, depending on the light-emitting pointer 100 being used, the electronic blackboard 10 can change the color, thickness, line type, and the like of a character, a figure, and the like.

The wireless communication unit 103 executes communication by a communication protocol such as Bluetooth (registered trademark), Bluetooth (registered trademark) Low Energy, and ZigBee (registered trademark). Other than these, the wireless communication unit 103 may execute communication by infrared light, wireless LAN, ultrasonic wave, visible light communication, and the like. The wireless communication unit 103 can transmit a writing detection signal, a writing completion signal, a back-end-on signal, a back-end-off signal, the ID, and the like to the coordinate detection apparatus 24. Note that information transmitted from the light-emitting pointer 100 to the coordinate detection apparatus 24 is not limited to these signals.

FIG. 5 is an example of a schematic view illustrating a configuration of the coordinate detection apparatus, and FIG. 6 is an example of a perspective view of a light reception/emission device 300. As illustrated in FIG. 5, the coordinate detection apparatus 24, which is a touch panel, has light reception/emission devices 300 (designated as 300-1, 300-2, 300-3, and 300-4 if necessary to distinguish, below) disposed, for example, at the upper left corner, the upper right corner, the lower left corner, and the lower right corner of the display surface 22 of the image display unit 20. The light reception/emission device 300 includes a light reception sensor 410 that detects infrared light, and a light emitter 420 that emits infrared light along the display surface 22 of the image display unit 20. The infrared light along the display surface 22 is infrared light emitted nearly parallel with the display surface 22, and just needs to be emitted in a predetermined range from the display surface 22. Besides, the light emitted from the light emitter 420 does not need to be infrared light, for example, may be visible light or ultraviolet light. However, visible light tends to be noticed by the user when turned on and off, and ultraviolet light has a chemical effect. Therefore, infrared light (including near-infrared light) is preferable.

Also, at least two light reception/emission devices 300 may be provided, having one side of the display surface 22 interposed. Providing the two devices enables to detect the coordinates of the light-emitting pointer 100 and the non-light-emitting pointers 200. Besides, as will be described later in a second embodiment, the coordinates of the light-emitting pointer 100 and the non-light-emitting pointer 200 may be detected at the same time. Note that if there are two light reception/emission devices 300, it is possible to detect the coordinates of two or more light-emitting pointers at the same time, and to detect the coordinates of two or more non-light-emitting pointers 200 at the same time. Meanwhile, providing three or more light reception/emission devices 300 makes it possible to increase the number of light-emitting pointers and non-light-emitting pointers 200 whose coordinates can be detected at the same time. For example, even if the coordinates of a light-emitting pointer 100 cannot be detected due to a position not visible from certain two light reception/emission devices 300, other two light reception/emission devices 300 may be able to detect the light-emitting pointer 100, and to detect the coordinates of the light-emitting pointer 100 .

Also, on four sides of the display surface 22 of the image display unit 20, retroreflector plates 320 (designated as 320-1, 320-2, 320-3, and 320-4 if necessary to distinguish, below) are placed. Light emitted from the light reception/emission device 300 is incident on the retroreflector plate 320, and the retroreflector plate 320 reflects the light in the incident direction. In other words, the retroreflector plate 320 is a plate-shaped reflector that reflects light. On the periphery on the surface side of the display surface 22 of the image display unit 20, a bezel part 360 is placed to hide the retroreflector plates 320. In other words, the retroreflector plate 320 is placed between the display surface 22 in a direction normal to the display surface 22, and the bezel part 360, and the inner frame 360a of the bezel part protrudes more inward toward the display surface 22 than the retroreflector plate 320. This bezel part 360 provided in the image display unit 20 prevents the retroreflector plates 320 from being smeared by touches of the user's fingers and the like.

The light emitter 420 of the light reception/emission device 300-1 emits infrared light along the display surface of the image display unit 20 toward a range entirely covering the rightward retroreflector plate 320-2 and the downward retroreflector plate 320-3.

Also, the light emitter 420 of the light reception/emission device 300-2 placed at the upper right corner emits infrared light along the display surface 22 of the image display unit 20. The light emitter 420 of the light reception/emission device 300-2 emits the infrared light toward a range entirely covering the leftward retroreflector plate 320-4 and the downward retroreflector plate 320-3.

This is the same for the light reception/emission device 300-3 and the light reception/emission device 300-4. The light emitter 420 of the light reception/emission device 300-3 emits the infrared light toward a range entirely covering the leftward retroreflector plate 320-4 and the upward retroreflector plate 320-1. The light emitter 420 of the light reception/emission device 300-4 emits the infrared light toward a range entirely covering the upward retroreflector plate 320-1 and the rightward retroreflector plate 320-2.

If nothing contacts the display surface 22 of the image display unit 20, the infrared light emitted from the light reception/emission device 300-1 is retroreflected by the retroreflector plate 320-2 and 320-3; the infrared light emitted from the light reception/emission device 300-2 is retroreflected by the retroreflector plate 320-3 and 320-4; the infrared light emitted from the light reception/emission device 300-3 is retroreflected by the retroreflector plate 320-4 and 320-1; and, the infrared light emitted from the light reception/emission device 300-4 is retroreflected by the retroreflector plate 320-1 and 320-2.

Reflected light reflected by each of the retroreflector plates 320 is detected by the light reception sensor 410 of the corresponding light reception/emission device 300.

As described above, the light-emitting pointer 100 includes the light-emitting element 110, which is a light-emitting element. If the pen point 100A of the light-emitting pointer 100 contacts the display surface 22 of the image display unit 20, the light-emitting element 110 of the pen point 100A of the light-emitting pointer 100 outputs infrared light.

As illustrated in FIG. 6, the light reception/emission device 300 includes the light reception sensor 410 and the light emitter 420. The light reception sensor 410 includes an image sensor 411, such as a CCD (charge-coupled device) image sensor or a CMOS (Complementary Metal Oxide Semiconductor) image sensor, and an imaging forming lens 412. The light emitter 420 emits infrared light by an infrared LED (Light emitting diode), an infrared laser, or the like. The light reception/emission device 300 is connected to the light reception/emission control circuit 350, and the light reception/emission control circuit 350 controls driving the light reception sensor 410 and the light emitter 420.

This infrared light is incident on the light reception sensor 410 of the light reception/emission device 300. The image sensor 411 includes elements constituting multiple pixels arranged in a horizontal direction with respect to the display surface 22, and the infrared light emitted by the light-emitting element 110 is detected by one or more elements of the image sensor 411. In other words, the quantity of light of an element that has sensed the infrared light becomes remarkably large. The position of such an element corresponds to the angles $\theta_1$ and $\theta_2$.

The coordinate detection apparatus 24 converts the position of the element that has sensed the light into coordinates by using the formula of triangulation, to detect the coordinates of the light-emitting pointer 100 having the light-emitting element 110 installed. The formula of triangulation will be described later.

Besides, if the non-light-emitting pointers 200, such as the user's finger, contacts the display surface 22 of the image display unit 20, infrared light emitted from the light emitter 420 of the light reception/emission device 300 is cut off at the contact spot of the non-light-emitting pointer 200 on the display surface 22. Therefore, one or more elements whose quantity of light becomes remarkably small is identified in the image sensor 411. The position of such an element corresponds to the angles $\theta_3$ and $\theta_4$.

The coordinate detection apparatus 24 detects the coordinates of the non-light-emitting pointer 200 by converting the position of the element at which the infrared light is cut off into coordinates, by using the formula of triangulation. The formula of triangulation will be described later.

<System configuration example>

FIG. 7 is a diagram schematically illustrating a system configuration example including the electronic blackboard 10, and FIG. 8 is an example of a block diagram illustrating a control system of the electronic blackboard 10. The electronic blackboard 10 is connected to a user PC (Personal Computer) 90 and a network 204. The image display unit 20 is controlled by the controller 60. The controller 60 is provided with a USB socket 72 to which a USB (Universal Serial Bus) cable 70 is connected, and an input socket 82 to which a VGA (Video Graphics Array) cable 80 is connected. In the example illustrated in FIG. 7, although the input socket 82 is connected to the VGA cable, the input socket 82 may be configured to be connectable with an input cable of other standards, such as HDMI (registered trademark) (High-Definition Multimedia Interface) and DisplayPort.

The user PC 90 includes a storage 94 that may be constituted with a magnetic disk drive. The storage 94 stores various contents and programs such as application software for displaying the contents. Accordingly, the user selects a desired content among the contents stored in the storage 94, to display the content on a monitor 92.

Therefore, when image data displayed on the monitor 92 of the user PC 90 is transferred via the USB cable 70 and the VGA cable 80, the controller 60 displays the same image as the image data displayed on the monitor 92, on a user PC screen 28 of the image display unit 20. The user PC screen 28 is taken from the user PC 90 via the interface 508 of the electronic blackboard 10.

The controller 60 is also connected to the network 204 such as the Internet or a LAN (Local Area Network) via a communication line 201, such as an optical fiber, and a network socket 202.

Besides, the controller 60 displays screen operation parts 26 to be pressed by the user when performing an input operation on the image display unit 20.

FIG. 9 is an example of a block diagram illustrating a hardware configuration of the coordinate detection apparatus of the electronic blackboard 10. The coordinate detection apparatus 24 includes a touch panel driver unit 250, the light reception/emission control circuit 350, a pen signal receiver unit 210, and the light reception/emission devices 300.

If the pen point 100A of the light-emitting pointer 100 contacts the display surface 22, a writing detection signal is received by the pen signal receiver unit 210. If the pen bottom 100B of the light-emitting pointer 100 contacts the display surface 22 of the image display unit 20, an erasure detection signal is received by the pen signal receiver unit 210. The pen signal receiver unit 210 is virtually the same as the short-distance wireless communication unit 515, and the pen signal receiver unit 210 is a functional name of the short-distance wireless communication unit 515 when receiving a signal from the light-emitting pointer 100. Note that the pen signal receiver unit 210 may transmit a signal to the light-emitting pointer 100.

As a detection unit, the light reception/emission control circuit 350 detects the coordinates of the light-emitting pointer 100, and detects the coordinates of the non-light-emitting pointer 200. The light reception/emission control circuit 350 calculates the coordinates of the light-emitting pointer 100 and the non-light-emitting pointer 200 based on the quantities of light detected by the light reception sensors 410 of the light reception/emission devices 300, and also controls light emission of the light emitters 420. The coordinates calculated by the light reception/emission control circuit 350 are input into the touch panel driver unit 250 as a coordinate position signal.

Also, the touch panel driver unit 250 converts a coordinate position signal, a writing detection signal, a writing completion signal, a back-end-on signal, a back-end-off signal, or an erasure detection signal input from the pen signal receiver unit 210 and the light reception/emission control circuit 350, into a predetermined event signal, to transmit the event signal to the controller 60.

<Functions of controller 60>

The controller 60 is a control unit of the electronic blackboard 10, having the hardware configuration illustrated in FIG. 3. The controller 60 provides functions implemented by software using these hardware components. For example, the CPU 501 runs a program loaded from the HDD 504 into the RAM 503, to implement the following functions.

FIG. 10 is an example of a functional block diagram of the controller 60 included in the electronic blackboard 10. The controller 60 of the electronic blackboard 10 includes a controller operation system unit 220 and an application unit 230.

The controller operation system unit 220 is the main control unit that manages and executes control processes executed on the controller 60. The controller operation system unit 220 is implemented by an OS, device drivers, and the like, to execute control and communication with the coordinate detection apparatus 24, the image display unit 20, and the user PC 90.

The application unit 230 executes a process of generating an image to be displayed on the display surface 22 of the image display unit 20, a process of displaying on the user PC screen 28, and the like. Also, the application unit 230 includes an event signal determination unit 231, a video input processing unit 232, an image drawing processing unit 234, a screen erasure processing unit 236, and a screen operation processing unit 238.

The event signal determination unit 231 monitors an event signal input from the controller operation system unit 220, and executes a process depending on the input event signal. The video input processing unit 232 executes a process for displaying an image input from the user PC 90 on the user PC screen 28 of the display surface 22 of the image display unit 20.

The image drawing processing unit 234 generates a handwriting image based on data of a coordinate position input from the coordinate detection apparatus 24 via the event signal determination unit 231. The image drawing processing unit 234 also superimposes the handwriting image on an image that has been already displayed, and displays the superimposed image on the display surface 22 of the image display unit 20.

The screen erasure processing unit 236 generates an image in the same background color as an image currently displayed, based on information of a coordinate position input from the coordinate detection apparatus 24 via the event signal determination unit 231, and superimposes the graphics of the background color on the image currently displayed, to display the superimposed image on the display surface 22 of the image display unit 20.

Thus, the handwriting image displayed on the image display unit 20 is superimposed on the image of the background color, and the handwriting image is seemingly erased from the display surface 22 of the image display unit 20.

The screen operation processing unit 238 converts information (a signal) of a coordinate position input from the coordinate detection apparatus 24 into a pointing device signal, such as a mouse event, and executes a process corresponding to turning on and off operations of the screen operation parts 26 displayed on the display surface 22 of the image display unit 20.

<Calculation of coordinates>

<<Coordinate detection of light-emitting pointer 100>>

Next, coordinate detection of the light-emitting pointer 100 will be described by using FIGs. 11, 12A, and 12B. FIG. 11 is an example of a diagram illustrating calculation of the position of a light-emitting pointer having a light-emitting element installed. FIGs. 12A and 12B are diagrams schematically illustrating quantities of light sensed by the light reception/emission device 300-1 and the light reception sensor of 300-2, respectively.

The light-emitting element 110 is placed at the pen point 100A of the light-emitting pointer 100, and if the pen point 100A contacts the display surface 22 of the image display unit 20, infrared light is emitted from the light-emitting element 110. This infrared light is reflected by the retroreflector plates 320, and is incident on the light reception sensors 410 of the light reception/emission devices 300. However, if the pen point 100A contacts the display surface 22 of the image display unit 20, the light reception/emission devices 300 turn off the infrared light. Note that to "turn off" includes to make the quantity of light so weak that the light reception sensor 410 cannot detect the light. Therefore, at the position where the light-emitting pointer 100 contacts the display surface 22 of the image display unit 20, a bright spot appears on which the quantity of infrared light is larger.

As illustrated in FIGs. 12A and 12B, when the infrared light is emitted from the light-emitting element 110 of the light-emitting pointer 100, the quantity of light of an element that has captured the light-emitting pointer 100 becomes remarkably large. Specifically, the brightness detected by the image sensor 411 is large on the element that has captured the light-emitting pointer 100. The light reception/emission control circuit 350 identifies an element in an image obtained by the light reception sensor 410 (a first imaging unit) of the light reception/emission device 300-2, at which the brightness greater than or equal to a threshold Th1 is obtained, and then, converts the position of this element in the horizontal direction into an angle $\theta_1$ (threshold Th1 is an example of a first threshold). For example, it is possible to obtain the angle $\theta_1$ by obtaining the sequence number of the element that has sensed the quantity of light greater than or equal to the threshold Th1 (greater than or equal to the first threshold), counting from an edge in the horizontal direction of the light reception sensor 410. Similarly, the angle $\theta_2$ is obtained from the position of an element in the light reception sensor 410 (a second imaging unit) of the light reception/emission device 300-2 on which the quantity of light becomes remarkably large.

Note that the light reception/emission control circuit 350 may identify multiple elements that have sensed respective quantities of light of the threshold Th1 or greater. This is because if the user uses multiple light-emitting pointers 100 at the same time, it is necessary to detect the coordinates of the multiple light-emitting pointers 100.

By converting the position of an element corresponding to a bright spot viewed from the light reception/emission devices 300-1 and 300-2 into the angles $\theta$, the light reception/emission control circuit 350 can calculate the coordinates (x1, y1) of the bright spot by the following formulas.

In the formulas, $\theta_1$ represents an angle formed by the straight line connecting the bright spot and the light reception/emission device 300-1, and the upper side of the display surface 22; $\theta_2$ represents an angle formed by the straight line connecting the bright spot and the light reception/emission device 300-2, and the upper side of the display surface 22; and W represents the interval between the light reception/emission device 300-1 and the light reception/emission device 300-2. The coordinates (x1, y1) of the light-emitting pointer 100 are calculated as follows: x1 = w

$\tan\theta_2/(\tan\theta_1+\tan\theta_2)$ $y1 = w \tan\theta_1 \cdot \tan\theta_2/(\tan\theta_1+\tan\theta_2)$

In this way, by taking the geometric arrangement of the light reception/emission devices 300 into consideration, it is possible to calculate the coordinates of a point pointed by the light-emitting pointer 100.

Note that if the user uses multiple light-emitting pointers 100, the light reception/emission control circuit 350 assigns an identifier (for example, a consecutive number starting from one) to each bright spot on the light reception sensor 410. The light reception/emission devices 300-1 and 300-2 recognize the same identifier for the same light-emitting pointer 100, and thereby, the light reception/emission control circuit 350 can detect the coordinates of each of the multiple light-emitting pointers 100, by using the angle $\theta$ obtained from the bright spot of the same identifier.

Also, by installing transmitters on light-emitting pointers 100 that generate different identification signals from each other, respectively, the coordinate detection apparatus 24 that receives these identification signals can identify the respective light-emitting pointers 100.

FIG. 13 is an example of a flowchart illustrating steps by which the light reception/emission control circuit 350 detects the coordinates of the light-emitting pointer 100. The process illustrated in FIG. 13 is executed repeatedly and periodically to detect the coordinates if a bright spot is detected.

First, suppose that the light-emitting element 110 emits light (S1). The light-emitting element 110 does not emit light at all the time, but emits light only when contacting the display surface 22. This can prevent the light-emitting pointer 100 from being detected before contacting the display surface 22, and can avoid drawing an image such as a character and a figure at a position that is not intended by the user.

In response to the light emission of the light-emitting element 110, the light reception/emission control circuit 350 causes the light emitter 420 to turn off the infrared light (S2). Turning off the infrared light makes it easier for the light reception/emission control circuit 350 to detect a bright spot that is generated by the light-emitting element 110 of the light-emitting pointer 100. Besides, it is possible to avoid detecting a part of the user's body as a dark spot, and drawing an image such as a character and a figure at a position that is not intended by the user.

The light reception sensor 410 of the light reception/emission device 300-1 obtains an image (S3), namely, captures an image along the display surface 22. The light reception sensor 410 of the light reception/emission device 300-2 also obtains an image (S3). Note that "to capture an image along the display surface 22" means to capture an image in a predetermined range from the display surface 22. Although it is preferable not to capture the display surface 22 in the image, the display surface 22 may be captured in the image if the light reception sensor 410 does not detect visible light. Besides, the maximum of the predetermined range is the imaging range of the light reception sensor 410. A range narrower than the imaging range obtained by trimming or the like may be used as the predetermined range. This is because it is just necessary to capture an image of the light-emitting pointer 100 and the non-light-emitting pointer 200 near the display surface 22. Specifically, a range may be several cm to 10 cm from the display surface 22.

Next, the light reception/emission control circuit 350 identifies the position of the bright spot captured by the light reception sensor 410 of the light reception/emission device 300-1 (S4). The light reception/emission control circuit 350 also identifies the position of the bright spot captured by the light reception sensor 410 of the light reception/emission device 300-2 (S4).

Next, the light reception/emission control circuit 350 calculates an angle $\theta_1$ (S5), namely, converts the position of an element corresponding to the bright spot into the angle $\theta_1$. The light reception/emission control circuit 350 calculates an angle $\theta_2$ (S5), namely, converts the position of an element corresponding to the bright spot into the angle $\theta_2$.

The light reception/emission control circuit 350 calculates the coordinates of the light-emitting pointer 100 by using the angles $\theta_1$ and $\theta_2$ (S6) .

<<Coordinate detection of non-light-emitting pointer 200>>

Next, coordinate detection of the non-light-emitting pointer 200 will be described by using FIGs. 14, 15A and 15B. FIG. 14 is an example of a diagram illustrating detection of the position of the non-light-emitting pointers 200, such as a finger, that does not have a light-emitting element installed. FIG. 15A and 15B are diagrams schematically illustrating quantities of light sensed by the light reception sensors of the light reception/emission devices 300-1 and 300-2, respectively.

The non-light-emitting pointer 200, such as the user's finger, is detected by using infrared light cut off by the non-light-emitting pointer 200. Infrared light emitted from the light emitters 420 of the light reception/emission devices 300-1 and 300-2 is captured by the light reception sensors 410 of the light reception/emission devices 300-1 and 300-2 in a state where the infrared light is cut off by the non-light-emitting pointer 200. From the two light emitters 420 of the light reception/emission devices 300-1 and 300-2, the infrared light is emitted at all the time, which is incident on the retroreflector plates 320-2, 320-3, and 320-4 placed on the right, left, and lower sides of the display surface 22 of the image display unit 20, to be retroreflected and to return. If the non-light-emitting pointers 200, such as the user's finger, cuts off a path of this infrared light, the infrared light is cut off, and as illustrated in FIGs. 15A and 15B, a dark spot appears at which the quantity of light decreases remarkably.

The light reception/emission control circuit 350 identifies an element in the image sensor 411, at which the brightness lower than or equal to a threshold Th2 (threshold Th2 is an example of a second threshold) is obtained. The light reception/emission control circuit 350 converts the position of this element in the horizontal direction with respect to the display surface 22 into an angle $\theta_3$. For example, it is possible to obtain the angle $\theta_3$ by obtaining the sequence number of the element that has sensed the quantity of light less than or equal to the threshold Th2 (less than or equal to the second threshold), counting from an edge in the horizontal direction of the light reception sensor 410. Similarly, the angle $\theta_4$ is obtained from the position of an element in the image sensor 411 of the light reception/emission device 300-2 on which the quantity of light is less than or equal to the threshold Th2.

Note that the light reception/emission control circuit 350 may identify multiple elements in the horizontal direction that have sensed quantities of light of the threshold Th or less. This is because if the user makes two non-light-emitting pointers 200 contact the display surface 22, it is necessary to detect the coordinates of the two non-light-emitting pointers 200. Furthermore, three or more non-light-emitting pointers 200 may be used at the same time, or multiple persons may perform handwriting by non-light-emitting pointers 200 at the same time.

In the following formulas, $\theta_3$ represents an angle formed by the straight line connecting a dark spot and the light reception/emission device 300-1, and a horizontal line; $\theta_4$ represents an angle formed by the straight line connecting the bright spot and the light reception/emission device 300-2, and the horizontal line; and W represents the interval between the light reception/emission device 300-1 and the light reception/emission device 300-2. The coordinates (x2, y2) of the non-light-emitting pointer 200 are calculated as follow:

$$x2 = w \tan\theta_4 / (\tan\theta_3 + \tan\theta_4)$$

$$y2 = w \tan\theta_3 \bullet \tan\theta_4 / (\tan\theta_3 + \tan\theta_4)$$

FIG. 16 is an example of a flowchart illustrating steps by which the light reception/emission control circuit 350 detects the coordinates of the non-light-emitting pointer 200. The process illustrated in FIG. 16 is executed repeatedly and periodically to detect the coordinates if a dark spot is detected.

The light emitter 420 emits infrared light (S1) .

The non-light-emitting pointer 200 cuts off the infrared light (S2).

The light reception sensor 410 of the light reception/emission device 300-1 obtains an image (S3), namely, captures an image along the display surface 22. The light reception sensor 410 of the light reception/emission device 300-2 also obtains an image (S3) .

Next, the light reception/emission control circuit 350 identifies the position of the dark spot captured by the light reception sensor 410 of the light reception/emission device 300-1 (S4). The light reception/emission control circuit 350 also identifies the position of the dark spot captured by the light reception sensor 410 of the light reception/emission device 300-2 (S4).

Next, the light reception/emission control circuit 350 calculates an angle $\theta_3$ (S5), namely, converts the position of an element corresponding to the dark spot into the angle $\theta_3$. The light reception/emission control circuit 350 calculates an angle $\theta_4$ (S4), namely, converts the position of an element corresponding to the dark spot into the angle $\theta_4$.

The light reception/emission control circuit 350 calculates the coordinates of the non-light-emitting pointer 200 by using the angles $\theta_3$ and $\theta_4$ (S6).

As described above, according to the embodiment using the coordinate detection apparatus 24 or the coordinate detection method executed by the coordinate detection apparatus 24, it is possible to distinguish and detect a light-emitting pointer 100 equipped with a light-emitting element, and a non-light-emitting pointer 200 such as the user's finger. In addition, since a light-guiding plate is not required necessarily for the display surface 22, a parallax is not generated, or is hardly generated. Furthermore, since the light reception/emission devices 300 are placed at the four corners of the image display unit 20, space saving is achieved.

Note that in the embodiment, it has been described that when the light-emitting pointer 100 contacts the display surface 22, the light emitter 420 is turned off; however, even if the light-emitting pointer 100 contacts the display surface 22, the light emitter 420 may emit the infrared light. The light reception/emission control circuit 350 can detect a light-emitting pointer 100 if the quantity of light is greater than or equal to a threshold, and can detect a non-light-emitting pointer 200 if the quantity of light is less than or equal to the threshold. Therefore, the coordinates of the light-emitting pointer 100 and the non-light-emitting pointer 200 can be detected at the same time.

However, when the light-emitting pointer 100 emits light while the light emitter 420 emits infrared light, there is a possibility that the infrared light of the light-emitting pointer 100 may become obscured in the infrared light emitted by the light emitter 420. Also, if the light-emitting pointer 100 is located distant from the light reception/emission device 300, it may be difficult for the light reception sensor 410 to detect the light-emitting pointer 100. Furthermore, it may be difficult for a person in charge at a manufacturer to appropriately specify the threshold for detecting infrared light of the light-emitting pointer 100 while the light emitter 420 emits infrared light. Therefore, in the embodiment, it is preferable that when the light-emitting pointer 100 contacts the display surface 22, the light emitter 420 is turned off. This makes it easier to detect the light-emitting pointer 100 even if the light-emitting pointer 100 is located distant from the light reception/emission device 300, and also makes it easier to specify the threshold. Besides, it is possible to avoid detecting a part of the user's body as a dark spot, and drawing an image such as a character and a figure at a position that is not intended by the user, while the user performs handwriting by using the light-emitting pointer 100.

(Second embodiment)

In this embodiment, an electronic blackboard 10 will be described in which the wavelength of infrared light from a light-emitting element 110 of a light-emitting pointer 100 is differentiated from the wavelength of infrared light from a light emitter 420 installed in a light reception/emission device 300, so that a light reception/emission control circuit 350 can distinguish and detect both at the same time.

FIG. 17 is a schematic perspective view of the light reception/emission device 300 in the embodiment. In the embodiment, two types of band-pass filters to transmit light of specific wavelength ranges are placed in a light reception sensor 410 installed in the light reception/emission device 300.

Accordingly, the light reception/emission device 300 can distinguish and detect infrared light emitted by the light-emitting element 110 of the light-emitting pointer 100, and infrared light emitted by the light emitter 420 installed in the light reception/emission device 300. For example, suppose that the wavelength of the infrared light emitted by the light-emitting pointer 100 is 800 nm, and the wavelength of the infrared light emitted by the light emitter 420 of the light reception/emission device 300 is 900 nm. Since the light reception sensor 410 of the light reception/emission device 300 is configured to include an image sensor 411 and an imaging forming lens 412, it is possible to place the different band-pass filters attached to the imaging forming lens 412. For example, a first band-pass filter 421 (a first filter) that cuts off infrared light of 850 nm or longer, and transmits infrared light below 850 nm; and a second band-pass filter 422 (a second filter) that transmits infrared light of 850 nm or longer, and cuts off infrared light below 850 nm, are placed in the imaging forming lens 412. With such a configuration, infrared light below 850 nm that has been transmitted by the first band-pass filter 421 is incident on a first region 431 of the image sensor 411, and infrared light of 850 nm or longer that has been transmitted by the second band-pass filter 422 is incident on a second region 432 of the image sensor 411.

In other words, the infrared light from the light-emitting pointer 100 that has been transmitted by the first band-pass filter 421 is incident on the first region 431, and the light reception/emission device 300 can detect only the light-emitting pointer 100. Similarly, the infrared light emitted from the light emitter 420 of the light reception/emission device 300 that has reflected by the retroreflector plates 320 and has been transmitted by the second band-pass filter 422 is incident on the second region 432, and the light reception/emission device 300 can detect only the non-light-emitting pointer 200, such as the user's finger. Configured as such, the light reception/emission device 300 can distinguish and detect the light-emitting pointer 100 and the non-light-emitting pointer 200.

Therefore, in the first region 431, only the infrared light from the light-emitting pointer 100 is detected, and the infrared light emitted from the light emitter 420 is not detected. Therefore, in the embodiment, when the light-emitting pointer 100 contacts the display surface 22, the light reception/emission control circuit 350 does not need to turn off the light emitter 420 of the light reception/emission device 300. By not turning off the light emitter 420, the light reception/emission control circuit 350 can detect the light-emitting pointer 100 and the non-light-emitting pointer 200 at the same time.

FIGs. 18A-18D are diagrams schematically illustrating examples of quantities of light detected by the light reception/emission devices 300-1 and 300-2. FIG. 18A illustrates an angle $\theta_1$ of the light-emitting pointer 100 detected by the light reception/emission device 300-1 in the first region 431, and FIG. 18B illustrates an angle $\theta_2$ of the light-emitting pointer 100 detected by the light reception/emission device 300-2 in the first region 431. FIG. 18C illustrates an angle $\theta_3$ of the non-light-emitting pointer 200 detected by the light reception/emission device 300-1 in the second region 432, and FIG. 18D illustrates an angle $\theta_4$ of the non-light-emitting pointer 200 detected by the light reception/emission device 300-2 in the second region 432.

In this way, the light reception/emission device 300-1 can detect the light-emitting pointer 100 and the non-light-emitting pointer 200 in the first region 431 and the second region 432 at the same time, and the light reception/emission device 300-2 can detect the light-emitting pointer 100 and the non-light-emitting pointer 200 in the first region 431 and the second region 432 at the same time.

FIG. 19 is an example of a flowchart illustrating operational steps of the coordinate detection apparatus 24.

The light emitter 420 emits the infrared light (S1). The non-light-emitting pointer 200 cuts off the infrared light (S2). Also, suppose that the light-emitting element 110 emits light (S3). Steps S1-S3 may be executed in a different sequence.

The light reception sensor 410 of the light reception/emission device 300-1 obtains an image (S4), namely, captures an image along the display surface 22. The light reception sensor 410 of the light reception/emission device 300-2 also obtains an image (S4).

Next, the light reception/emission control circuit 350 identifies the position of the bright spot captured by the light reception sensor 410 of the light reception/emission device 300-1 (S5). The light reception/emission control circuit 350 also identifies the position of the bright spot captured by the light reception sensor 410 of the light reception/emission device 300-2 (S5).

Also, the light reception/emission control circuit 350 identifies the position of the dark spot captured by the light reception sensor 410 of the light reception/emission device 300-1 (S6). The light reception/emission control circuit 350 also identifies the position of the dark spot captured by the light reception sensor 410 of the light reception/emission device 300-2 (S6). Steps S5 and S6 may be executed in a different sequence.

Next, the light reception/emission control circuit 350 calculates an angle $\theta_1$ (S7). The light reception/emission control circuit 350 also calculates an angle $\theta_2$ (S7).

Furthermore, the light reception/emission control circuit 350 calculates an angle $\theta_3$ (S8). The light reception/emission control circuit 350 also calculates an angle $\theta_4$ (S8). Steps S7 and S8 may be executed in a different sequence.

The light reception/emission control circuit 350 calculates the coordinates of the light-emitting pointer 100 by using the angles $\theta_1$ and $\theta_2$, and calculates the coordinates of the non-light-emitting pointer 200 by using the angles $\theta_3$ and $\theta_4$ (S9).

In this way, the light reception/emission control circuit 350 can detect the coordinates of the light-emitting pointer 100 and the non-light-emitting pointer 200 at the same time. In addition to such an effect, according to the embodiment, even if a contact position of the light-emitting pointer 100 on the display surface 22 of the image display unit 20 is extremely distant from or extremely close to the light reception/emission device 300, it is easy for the light reception/emission device 300 to detect the light-emitting pointer 100.

FIG. 20 is a diagram illustrating an example of a light-emitting pointer distant from a light reception sensor. FIGs. 21A and 21B are examples of diagrams illustrating quantities of light detected by the light reception sensors of the light reception/emission devices in a state illustrated in FIG. 20.

If the position of the light-emitting pointer 100 is far from the light reception/emission device 300, the quantity of light detected by the light reception sensor 410 of the light reception/emission device 300-1 is very small as illustrated in FIG. 21A. On the other hand, since the position of the light-emitting pointer 100 is close to the light reception/emission device 300-2, the quantity of light detected is very large as illustrated in FIG. 21B.

However, even in a state where there is a long distance between the light reception/emission device 300-1 and the light-emitting pointer 100, and the infrared light from the light-emitting pointer 100 is barely detected as illustrated in FIG. 21B, the light reception/emission device 300-1 can cut off infrared light other than that coming from the light-emitting-pointer 100, which makes it easier to detect the light-emitting pointer 100. Therefore, even if the light-emitting pointer 100 is on the edge of the display surface 22 as in FIG. 20, it is easy to detect the light-emitting pointer 100.

(Third embodiment)

In this embodiment, an electronic blackboard 10 will be described that can detect multiple light-emitting pointers 100 at the same time.

FIGs. 22A-22C illustrate an example of a light reception/emission device of a coordinate detection apparatus in the embodiment where FIG. 22A is a perspective view of a light reception/emission device 300; FIG. 22B is a schematic view illustrating a light reception state of an image sensor; and FIG. 22C includes diagrams illustrating quantities of light detected by light reception sensors 410.

Multiple light-emitting pointers 100 in the embodiment will be described. The light-emitting pointers 100 can output infrared light in frequency ranges different from each other. For example, suppose that there are three light-emitting pointers 100 (designated as 100-1, 100-2, and 100-3 to be distinguished below) that output infrared having wavelengths of $\lambda1$ nm, $\lambda2$ nm, and $\lambda3$ nm, respectively. Also, suppose that the wavelength of infrared light output by the light emitter 420 is $\lambda4$ nm. $\lambda1$ to $\lambda4$ are different from each other.

Meanwhile, four types of band-pass filters 441, 442, 443, and 444 that exclusively transmit wavelength ranges for $\lambda1$ nm, $\lambda2$ nm, $\lambda3$ nm, and $\lambda4$ nm are placed in the imaging forming lens 412 of the light reception sensor 410 in the light reception/emission device 300. Therefore, four regions 451, 452, 453, and 454 corresponding to these band-pass filters 441, 442, 443, and 444 are formed on the image sensor 411.

Only infrared light of the wavelength $\lambda1$ is incident on the region 451; only infrared light of the wavelength $\lambda2$ is incident on the region 452; only infrared light of the wavelength $\lambda3$ is incident on the region 453; and only infrared light of the wavelength $\lambda4$ is incident on the region 454.

Accordingly, as illustrated in FIG. 22C, the light reception/emission control circuit 350 can separate and detect the infrared light of each of the light-emitting pointers 100-1 to 100-3, and the non-light-emitting pointer 200. Besides, by using $\theta_{\alpha 1}$ and $\theta_{\beta 1}$ detected in the region 451, $\theta_{\alpha 2}$ and $\theta_{\beta 2}$ detected in the region 452, $\theta_{\alpha 3}$ and $\theta_{\beta 3}$ detected in the region 453, and $\theta_{\alpha 4}$ and $\theta_{\beta 4}$ detected in the region 454, and using the formula of triangulation, the light reception/emission control circuit 350 can measure the coordinates of the light-emitting pointers 100-1 to 100-3, and the non-light-emitting pointer 200. Therefore, the electronic blackboard 10 in the embodiment can detect the coordinates of three light-emitting pointers 100, and the non-light-emitting pointer 200 at the same time.

FIG. 23 is an example of a flowchart illustrating operational steps of the coordinate detection apparatus 24. In the description of FIG. 23, differences from FIG. 19 will be mainly described. First, Steps S1 and S2 are the same as in FIG. 19. Suppose that at Step S3, three light-emitting elements 110 emit light, respectively. The light reception sensors 410 obtain respective images at Step S4.

At Step S5, the light reception/emission control circuit 350 identifies three bright spot positions captured by the light reception sensor 410 of the light reception/emission device 300-1 (S5). The light reception/emission control circuit 350 also identifies three bright spot positions captured by the light reception sensor 410 of the light reception/emission device 300-2 (S5). In other words, the light reception/emission control circuit 350 identifies the bright spot positions in the regions 451-453, respectively.

Besides, the light reception/emission control circuit 350 identifies a dark spot position captured by the light reception sensor 410 of the light reception/emission device 300-1 (S6). The light reception/emission control circuit 350 also identifies a dark spot position captured by the light reception sensor 410 of the light reception/emission device 300-2 (S6). In other words, the light reception/emission control circuit 350 identifies a dark spot position in the region 454.

Next, the light reception/emission control circuit 350 calculates angles $\theta_{\alpha 1}$ to $0_{a3}$ (S7). The light reception/emission control circuit 350 also calculates angles $\theta_{\beta 1}$ to $\theta_{\beta 3}$ (S7) .

Also, the light reception/emission control circuit 350 calculates an angle $\theta_{\alpha 4}$ (S8). The light reception/emission control circuit 350 also calculates an angle $\theta_{\beta 4}$ (S8).

The light reception/emission control circuit 350 calculates the coordinates of the three light-emitting pointers 100, and calculates the coordinates of the single non-light-emitting pointer 200 (S9) .

Similar to the second embodiment, in the present embodiment, even if the light-emitting pointer 100 contacts the display surface 22, the light reception/emission control circuit 350 does not turn off the light emitter 420. Therefore, the light reception/emission control circuit 350 can measure the coordinates of the three light-emitting pointers 100-1 to 100-3, and the non-light-emitting pointer 200 at the same time.

Note that depending on the extent of the regions 451-454, the sensitivity of the image sensor 411, and the like, the number of the light-emitting pointers 100 (three in FIG. 22A-22C) and the number of band-pass filters (four in FIG. 22A-22C) can be changed, and is not limited to the illustrated example.

(Fourth embodiment)

In this embodiment, a coordinate detection apparatus 24 will be described that can detect the coordinates of a light-emitting pointer 100 and a non-light-emitting pointer 200 on the projection surface of a projector.

FIG. 24 illustrates a schematic configuration diagram of an image display system 400 that includes a projector 500 and a coordinate detection apparatus 24. The projector 500 projects an image 67 on a screen 66. Since the image 67 is displayed by being projected, the projection surface corresponds to a display surface 22 in the embodiment. The coordinate detection apparatus 24 is installed on the upper side of the projected image 67. The light reception/emission device 300 is placed at the right and left edges of the coordinate detection apparatus 24.

The coordinate detection apparatus 24 is attached to the screen 66 or a wall by an attachment method suitable for the screen 66 or the wall. For example, the magnetic force from magnets may be used for attaching to a metal wall, or suction cups may be used for attaching to a flat wall. Alternatively, the user may affix Velcro (registered trademark) on the wall, to attach the coordinate detection apparatus 24 by Velcro. If attaching to the screen 66, a binder or the like may be used for attaching the coordinate detection apparatus 24 so that the screen 66 is interposed.

Similarly, the retroreflector plates 320 are attached on the left, right, and lower sides of the image 67. The method for attaching the retroreflector plates 320 may be the same as the method for the coordinate detection apparatus 24. Alternatively, the coordinate detection apparatus 24 and the retroreflector plate 320 may be provided as an integrated device.

FIG. 25 includes diagrams schematically illustrating an extension process of the retroreflector plates 320 integrated with the coordinate detection apparatus 24. The retroreflector plates 320 are first attached to the wall in a folded state such that the single retroreflector plate 320-2 comes upward, and the two retroreflector plates 320-3 and 320-4 come downward with respect to the coordinate detection apparatus 24. As illustrated in FIG. 25(b), a revolving part 601 rotatably supports the two downward retroreflector plates 320-3 and 320-4, and the user can rotate the two retroreflector plates 320-3 and 320-4 clockwise by 90 degrees.

Next, as illustrated in FIG. 25(c), among the two retroreflector plates 320-3 and 320-4, the user rotates the retroreflector plate 320-3 clockwise by 90 degrees. Next, as illustrated in FIG. 25(d), the user rotates the retroreflector plate 320-2 clockwise by 270 degrees. This arrangement enables to retroreflect infrared light emitted by the light reception/emission devices 300-1 and 300-2.

In this way, having the coordinate detection apparatus 24 and the retroreflector plates 320 attached appropriately, the coordinate detection apparatus 24 can detect coordinates of the light-emitting pointer 100 and the non-light-emitting pointer 200 as in the first to third embodiments.

Note that three retroreflector plates 320 (or one or more retroreflector plates 320) may be provided independently. In this case, the user attaches the three retroreflector plates 320 so as to surround the image 67.

Referring back to FIG. 24, description will continue. A user PC 90 is connected to the coordinate detection apparatus 24, and the user PC 90 is connected to the projector 500 via a VGA cable or the like. The user PC 90 is also connected to the coordinate detection apparatus 24. The coordinate detection apparatus 24 and the user PC 90 may be connected wirelessly, and the user PC 90 and the projector 500 may be connected wirelessly.

Predetermined application software runs on the user PC 90, to provide an API (Application Program Interface) to the coordinate detection apparatus 24. In other words, the coordinate detection apparatus 24 outputs a coordinate position signal to this API so that the application software can obtain the coordinates of the light-emitting pointer 100 and the non-light-emitting pointer 200. Therefore, it is possible to draw an image such as a character and a figure from a trajectory of coordinates.

The application software displays an image such as a character and a figure on a monitor 92 of the user PC 90. Since this image is transmitted to the projector 500 via a VGA cable or the like, the projector 500 can project an image such as a character and a figure on the screen 66 or the wall. Note that application software may have a function to display electronic data and the like used as a meeting material, and the application software can superimpose an image such as a character and a figure on the meeting material, and can display the superimposed image on the monitor 92. Therefore, the projector 500 can also project an image having such data superimposed. Note that although PowerPoint (registered trademark) is known as such application software, the application software simply needs to have the above API.

FIG. 26 is a diagram schematically illustrating a system configuration example of the image display system in the embodiment. FIG. 26 will be described mainly focusing on differences from FIG. 9. The controller 60 in FIG. 9 is replaced with the user PC 90 in FIG. 26. In addition, the user PC 90 outputs an image to the projector 500, not to the image display unit 20.

In addition to the components in FIG. 9, the coordinate detection apparatus 24 in FIG. 26 includes a communication unit 270. Similarly, the user PC 90 includes a communication unit 56, and the coordinate detection apparatus 24 can transmit a coordinate position signal to the user PC 90. The communication unit 270 may be a wireless communication device using, for example, Bluetooth (registered trademark), ZigBee (registered trademark), or wireless LAN, or may be a USB host or the like to be capable of priority connection. Note that the user PC 90 includes a CPU 51, a RAM 52, a ROM 53, an HDD 54, and a VGA I/F 55, as generic components of an information processing apparatus. The user PC 90 provides the same functions as the controller 60 illustrated in FIG. 10, by causing the CPU 51 to run a program stored in the HDD 54.

FIG. 27 is an example of a schematic configuration diagram illustrating operational steps of the image display system when the light-emitting pointer 100 emits light.

S1 : First, the light reception/emission control circuit 350 continues to keep the light emitter 420 turned on until receiving a writing detection signal or after receiving the writing completion signal.

S2: In response to a contact on the display surface 22 of the light-emitting pointer 100 performed by the user, the light-emitting element 110 of the light-emitting pointer 100 emits light.

S3: Having detected the contact on the display surface 22 by the contact detection part 102, the light-emitting pointer 100 transmits a writing detection signal to the coordinate detection apparatus.

S4: The pen signal receiver unit 210 of the coordinate detection apparatus 24 receives the writing detection signal, and the light reception/emission control circuit 350 causes the light emitter 420 to stop emitting the infrared light (to turn off the light).

S5: The light reception sensor 410 of the light reception/emission device 300 obtains an image. The light reception sensor 410 of the light reception/emission device 300 periodically captures an image, and obtains the image after the infrared has been turned off.

S6: The light reception/emission control circuit 350 calculates the coordinates of the light-emitting pointer 100, as described in the first embodiment.

S7: The communication unit 270 of the coordinate detection apparatus 24 transmits a coordinate position signal to the user PC 90.

S8: The communication unit 56 of the user PC 90 receives the coordinate position signal, and the application software draws an image such as a character and a figure, using the coordinate position signal. The application software also executes a process of superimposing an image such as a character and a figure on electronic data used as a meeting material.

S9: the user PC 90 transmits the image, having the image such as a character and a figure superimposed on the electronic data, to the projector 500.

S10: Accordingly, the projector 500 projects the image.

FIG. 28 is an example of a schematic configuration diagram illustrating operational steps of the image display system if the non-light-emitting pointer 200 cuts off the infrared light. FIG. 28 will be described mainly focusing on differences from FIG. 27. First, Step S1 is the same as in FIG. 27.

S2: In FIG. 28, the user cuts off infrared light by the non-light-emitting pointer 200. The event that the infrared light has been cut off is not specifically indicated to the coordinate detection apparatus. Subsequent Steps S5-S10 may be the same as in FIG. 27.

In this way, the coordinate detection apparatus 24 and the retroreflector plates 320 in the embodiment can be transported by the user, so as to be attached to a suitable wall or a screen. Therefore, there is an advantage that the electronic blackboard 10 does not occupy a space in an office or the like. Besides, the coordinate detection apparatus 24 can be installed in a location where users hold a meeting.

Alternatively, although the configuration example in FIGs. 24 and 25 has the two light reception/emission devices 300 integrated, the light reception/emission devices 300-1 and 300-2 may be attached independently. In other words, the user may attach the light reception/emission devices 300-1 and 300-2 separately to a wall or the like. This means that the user can discretionarily determine the interval between the light reception/emission devices 300-1 and 300-2. Therefore, it is possible to install the coordinate detection apparatus 24 in accordance with the size of an image 67 to be projected by the projector 500.

<Other embodiments>

As above, most preferable embodiments of the present invention have been described. Note that the present invention is not limited to these embodiments, but various variations and modifications may be made without departing from the scope of the present invention.

For example, the retroreflector plate 320 does not need to be an object that reflects light, and may be a light emitter, for example, a plate-shaped light emitter that uniformly emits light, such as an LED, an organic EL, and fluorescent light. Besides, the retroreflector plates 320 may consist of light-guiding plates, and in this case, infrared light emitted by the light reception/emission device 300 is guided by the light-guiding plate to the surroundings of the display surface 22.

Also, the configuration examples illustrated in FIGs. 9, 10 and the like in the above embodiments include components that are divided depending on main functions in order to make the processes on the electronic blackboard 10 easily understandable. However, the present invention is not limited by a division of processing units and/or names of components. A process of the electronic blackboard 10 may be further divided into more processing units depending on content of the process. Besides, a processing unit may be further divided to include more processes.

Note that the light reception sensor 410 is an example of an imaging unit; the light reception/emission control circuit 350 is an example of a detection unit; the pen signal receiver unit 210 is an example of a signal receiver unit; the light emitter 420 is an example of a light emitter unit; and the controller 60 is an example of a display control unit.

This international patent application claims priority based on Japanese Patent Application No. 2015-085954 filed on April 20, 2015, and Japanese Patent Application No. 2016-083906 filed on April 19, 2016, and the entire contents of the Japanese Patent Application No. 2015-085954 and Japanese Patent Application No. 2016-083906 are incorporated herein by reference.

[Description of Reference Numerals]

10 electronic blackboard
20 image display unit
22 display surface
24 coordinate detection apparatus
100 light-emitting pointer
110 light-emitting element
200 non-light-emitting pointer
210 pen signal receiver unit
300 light reception/emission device
320 retroreflector plate
350 light reception/emission control circuit

360 bezel part
400 image display system
410 light reception sensor

## Claims

**1.** A coordinate detection apparatus for detecting coordinates of a light-emitting pointer and a non-light-emitting pointer on a display surface, the coordinate detection apparatus comprising:

an imaging unit configured to capture an image of at least one of the light-emitting pointer and the non-light-emitting pointer in a predetermined range from the display surface; and
a detection unit configured to detect a quantity of light generated by the light-emitting pointer emitting light in the predetermined range so as to detect the coordinates of the light-emitting pointer, and to detect a quantity of light that is emitted on the display surface and is cut off by the non-light-emitting pointer in the predetermined range so as to detect the coordinates of the non-light-emitting pointer.

**2.** The coordinate detection apparatus as claimed in claim 1, wherein the detection unit detects the coordinates of the light-emitting pointer based on a position in an image sensor at which the quantity of light greater than or equal to a first threshold has been detected in the image of the predetermined range captured by the imaging unit, and detects the coordinates of the non-light-emitting pointer based on a position in the image sensor at which the quantity of light less than or equal to a second threshold has been detected.

**3.** The coordinate detection apparatus as claimed in claim 2, further comprising:

a signal receiver unit configured to receive a signal representing that the light-emitting pointer has contacted the display surface; and
a light emitter unit configured to emit light within a range covering the predetermined range from the display surface,
wherein in a case where the signal receiver unit has received the signal, the detection unit causes the light emitter unit to turn off the light, to detect the quantity of light generated by the light-emitting pointer emitting the light in the image of the predetermined range obtained by the imaging unit in a state where the light is turned off.

**4.** The coordinate detection apparatus as claimed in claim 3, wherein in a case where the signal receiver unit does not receive the signal, or has received a signal representing that the light-emitting pointer is separated from the display surface, the detection unit causes the light emitter unit to emit the light, to detect, in a state of the light being emitted, the quantity of light that is cut off by the non-light-emitting pointer in the image of the predetermined range obtained by the imaging unit.

**5.** The coordinate detection apparatus as claimed in any one of claims 2 to 4, wherein the imaging units are placed at two locations between which one side of the display surface is interposed,
wherein the detection unit applies triangulation to a first position in the image sensor at which the quantity of light is greater than or equal to the first threshold in the image of the predetermined range captured by the first imaging unit, and to a second position in the image sensor at which the quantity of light is greater than or equal to the first threshold in the image of the predetermined range captured by the second imaging unit, so as to detect the coordinates of the light-emitting pointer, and
wherein the detection unit applies triangulation to a third position in the image sensor at which the quantity of light is less than or equal to the second threshold in the image of the predetermined range captured by the first imaging unit, and to a fourth position in the image sensor at which the quantity of light is less than or equal to the second threshold in the image of the predetermined range captured by the second imaging unit, so as to detect the coordinates of the non-light-emitting pointer.

**6.** The coordinate detection apparatus as claimed in claim 1 or 2, further comprising:

a light emitter unit configured to emit light having a wavelength different from that emitted by the light-emitting pointer in a predetermined range from the display surface,
wherein the imaging unit includes a first filter that transmits light having the wavelength output by the light-emitting pointer, and a second filter that transmits light having the wavelength emitted by the light emitter unit, and

wherein the detection unit detects the coordinates of the light-emitting pointer based on the quantity of light that has been transmitted by the first filter and has been obtained by the imaging unit, and detects the coordinates of the non-light-emitting pointer based on the quantity of the light that has been transmitted by the second filter and has been obtained by the imaging unit.

**7.** The coordinate detection apparatus as claimed in claim 6, wherein the first filter further includes a plurality of regions that transmit light having respective wavelengths different from each other.

**8.** The coordinate detection apparatus as claimed in any one of claims 1 to 7, wherein the display surface is surrounded by a bezel part on a periphery,
wherein a light reflector or a light emitter is provided between the display surface in a direction normal to the display surface, and the bezel part, and an inner frame of the bezel part protrudes more inward toward the display surface than the light reflector or the light emitter.

**9.** An electronic blackboard comprising:

the coordinate detection apparatus as claimed in any one of claims 1 to 8; and
a display control unit configured to display an image on the display surface, based on coordinates output from the coordinate detection apparatus.

**10.** An image display system that detects coordinates of a light-emitting pointer and a non-light-emitting pointer on a display surface, and displays an image depending on the coordinates, the image display system comprising:

an imaging unit configured to capture an image of at least one of the light-emitting pointer and the non-light-emitting pointer in a predetermined range from the display surface;
a light emitter unit configured to emit light in a predetermined range from the display surface;
a reflector configured to reflect the light emitted from the light emitter unit;
a detection unit configured to detect a quantity of light generated by the light-emitting pointer emitting light in the predetermined range so as to detect the coordinates of the light-emitting pointer, and to detect a quantity of light that is emitted on the display surface and is cut off by the non-light-emitting pointer in the predetermined range so as to detect the coordinates of the non-light-emitting pointer; and
a display control unit configured to display an image on the display surface, based on coordinates output from the detection unit.

**11.** A coordinate detection method for detecting coordinates of a light-emitting pointer and a non-light-emitting pointer on a display surface, the method comprising:

causing an imaging unit to capture an image of at least one of the light-emitting pointer and the non-light-emitting pointer in a predetermined range from the display surface; and
causing a detection unit to detect a quantity of light generated by the light-emitting pointer emitting light in the predetermined range so as to detect the coordinates of the light-emitting pointer, and to detect a quantity of light that is emitted on the display surface and is cut off by the non-light-emitting pointer in the predetermined range so as to detect the coordinates of the non-light-emitting pointer.

FIG.1A

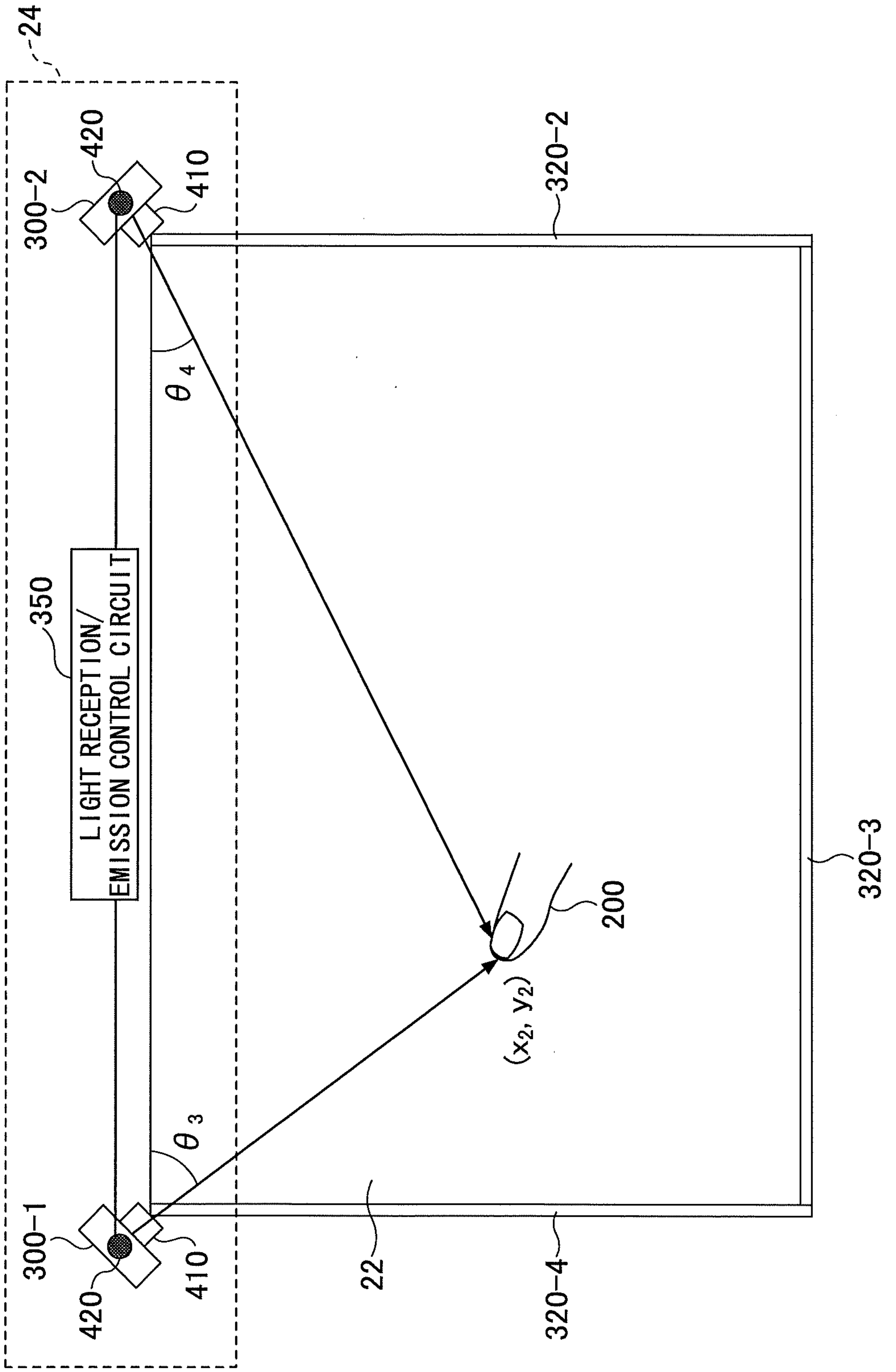
24
350
LIGHT RECEPTION/
EMISSION CONTROL CIRCUIT
300-1
300-2
420
410
θ 3
θ 4
(x2, y2)
200
22
320-2
320-3
320-4

FIG.1B

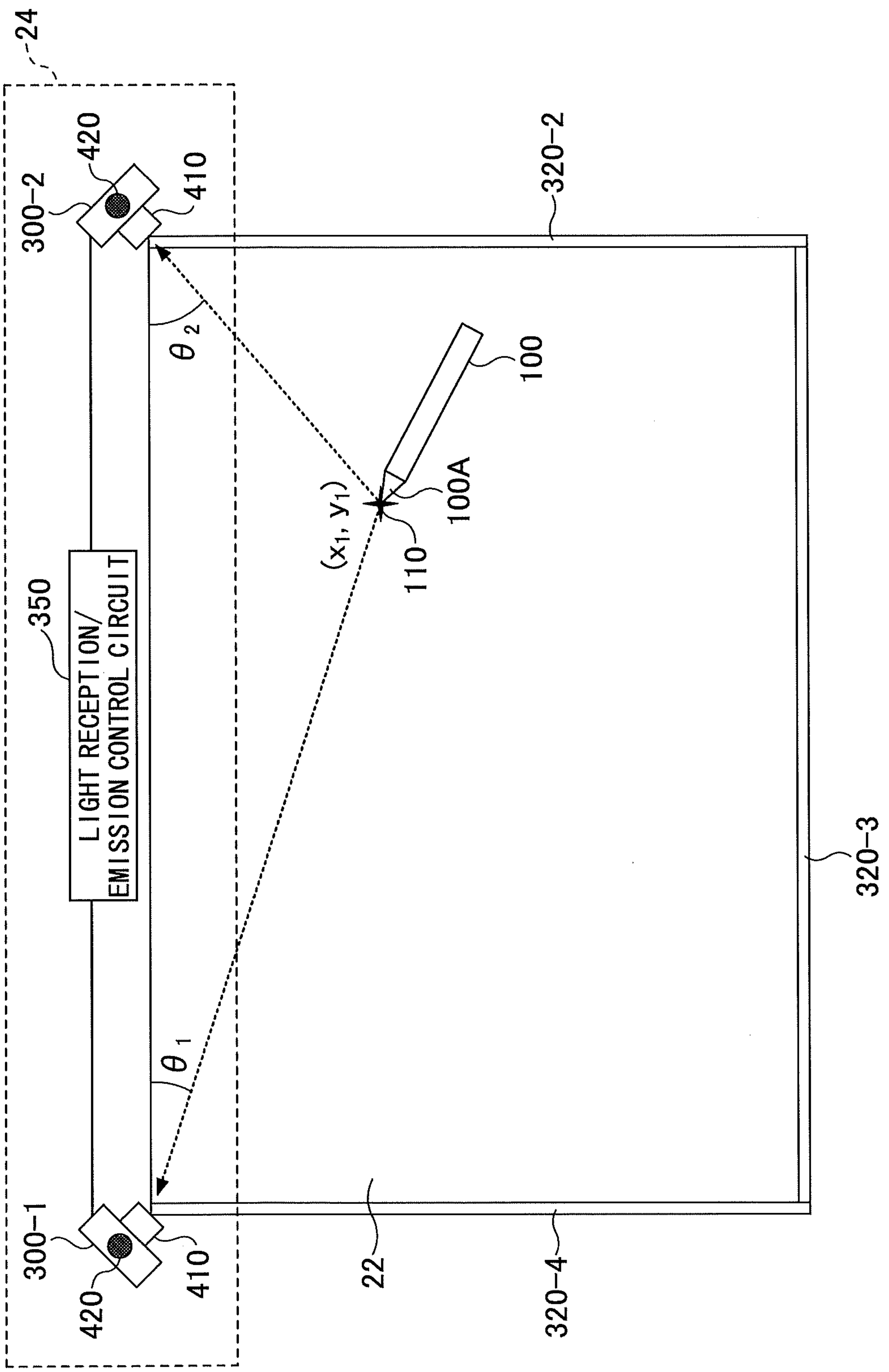
24
300-2
420
410
320-2
θ2
100
100A
(x1, y1)
110
350
LIGHT RECEPTION/
EMISSION CONTROL CIRCUIT
320-3
θ1
300-1
420
410
22
320-4

FIG.2

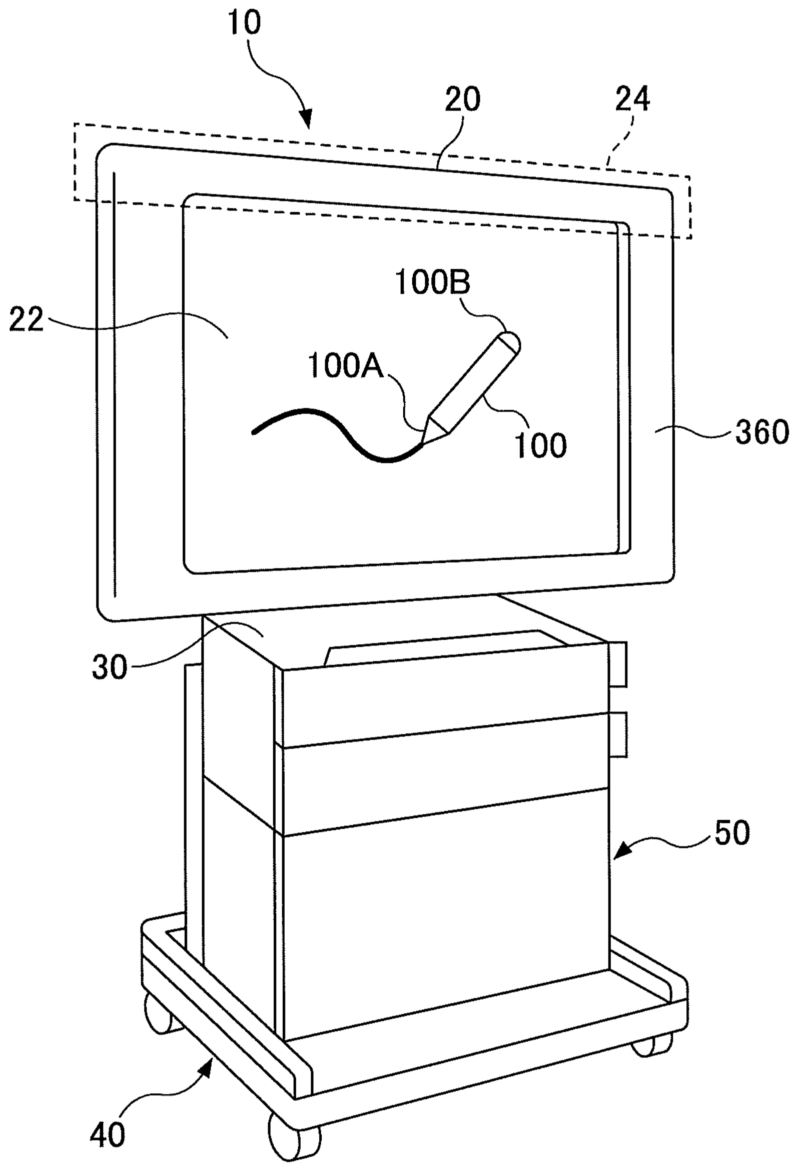

FIG.3

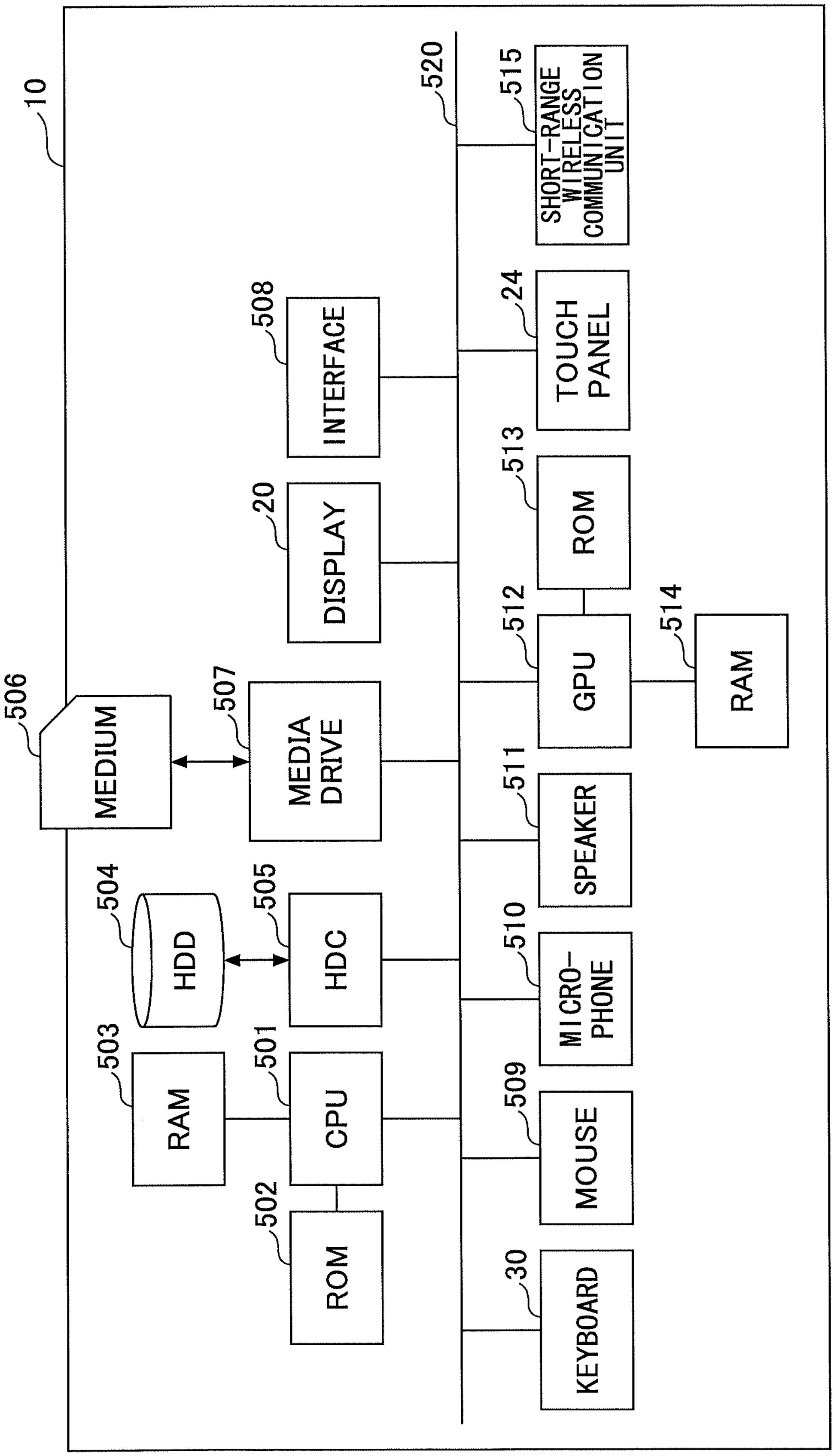
10
520
515
SHORT-RANGE WIRELESS COMMUNICATION UNIT
24
TOUCH PANEL
513
ROM
512
GPU
514
RAM
511
SPEAKER
510
MICRO-PHONE
509
MOUSE
30
KEYBOARD
508
INTERFACE
20
DISPLAY
507
MEDIA DRIVE
506
MEDIUM
505
HDC
504
HDD
503
RAM
501
CPU
502
ROM

# FIG.4

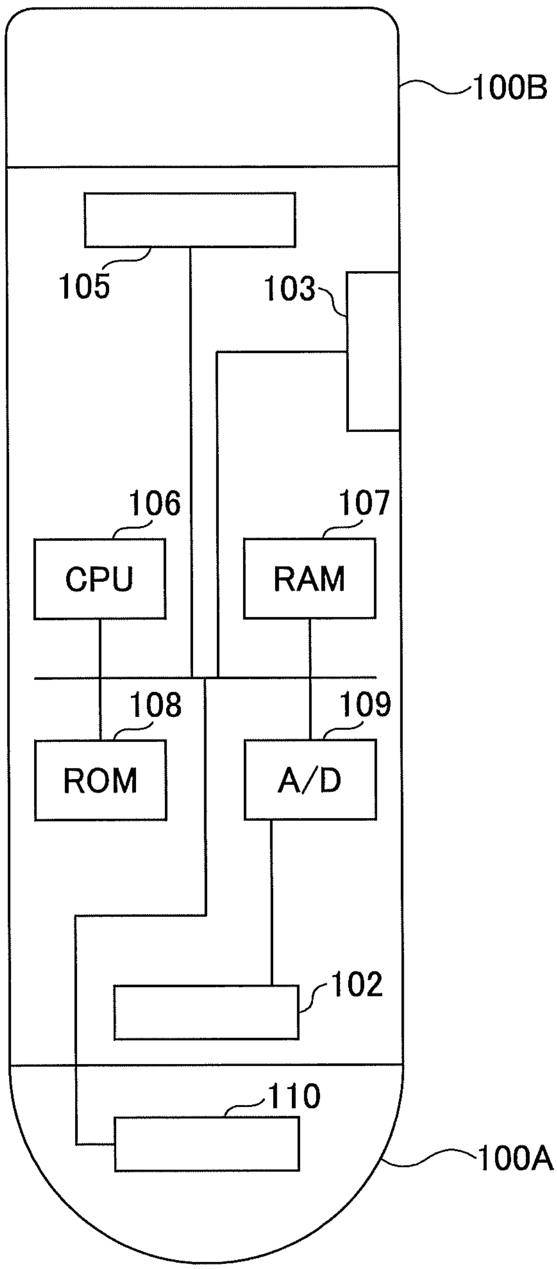

FIG.5

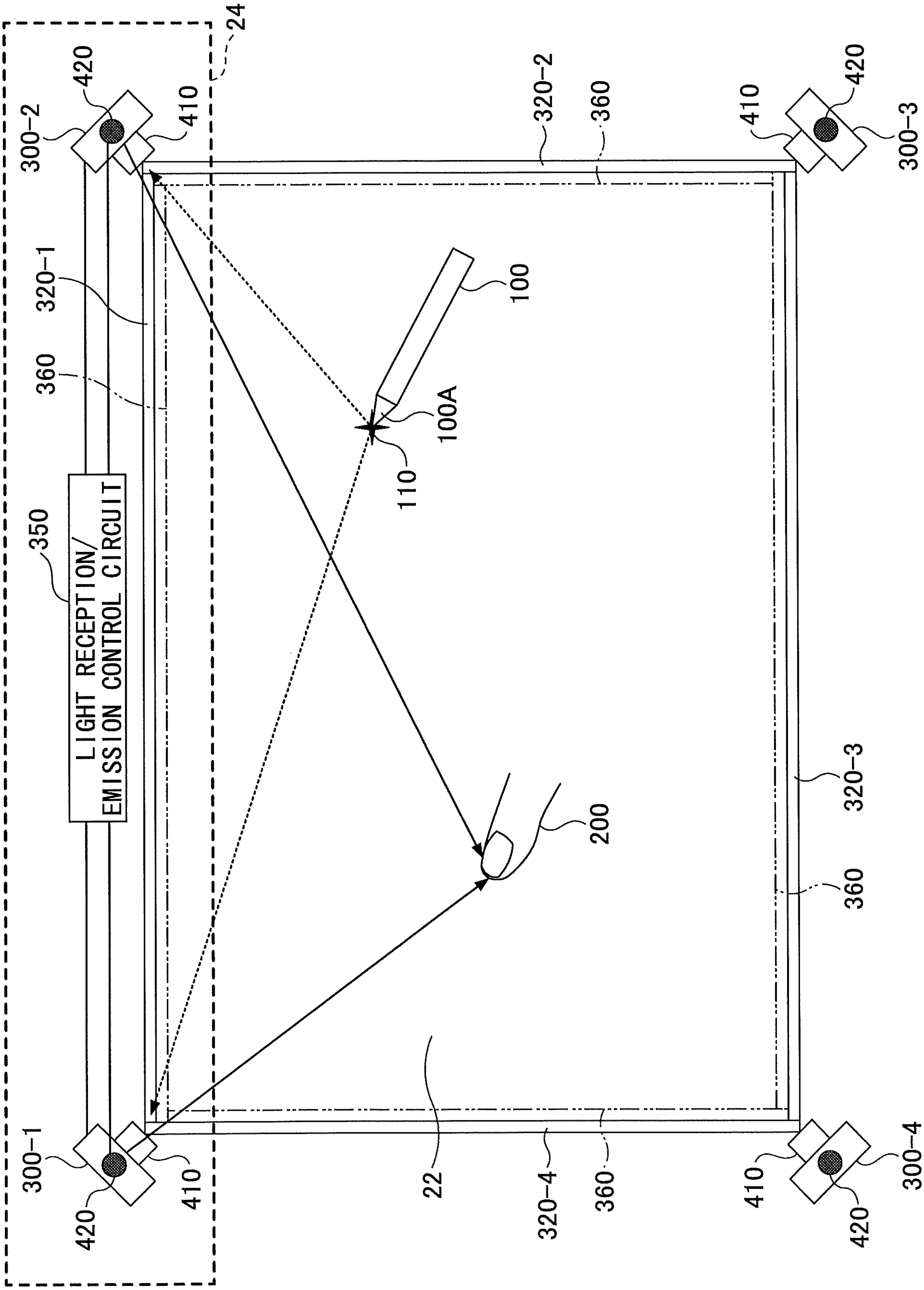
LIGHT RECEPTION/
EMISSION CONTROL CIRCUIT
350
24
300-1
300-2
300-3
300-4
320-1
320-2
320-3
320-4
360
410
420
100
100A
110
200
22

FIG.6

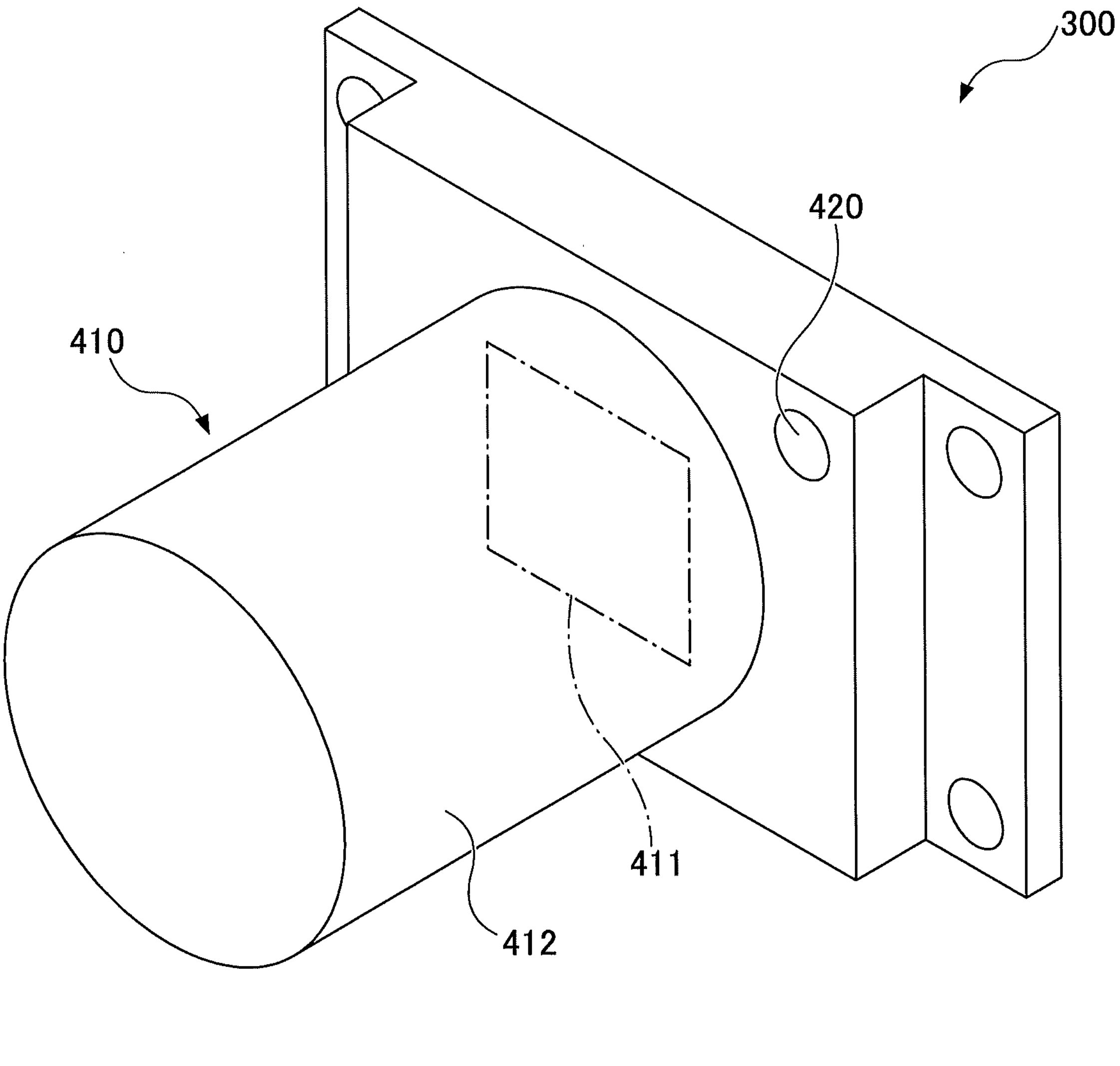

FIG.7

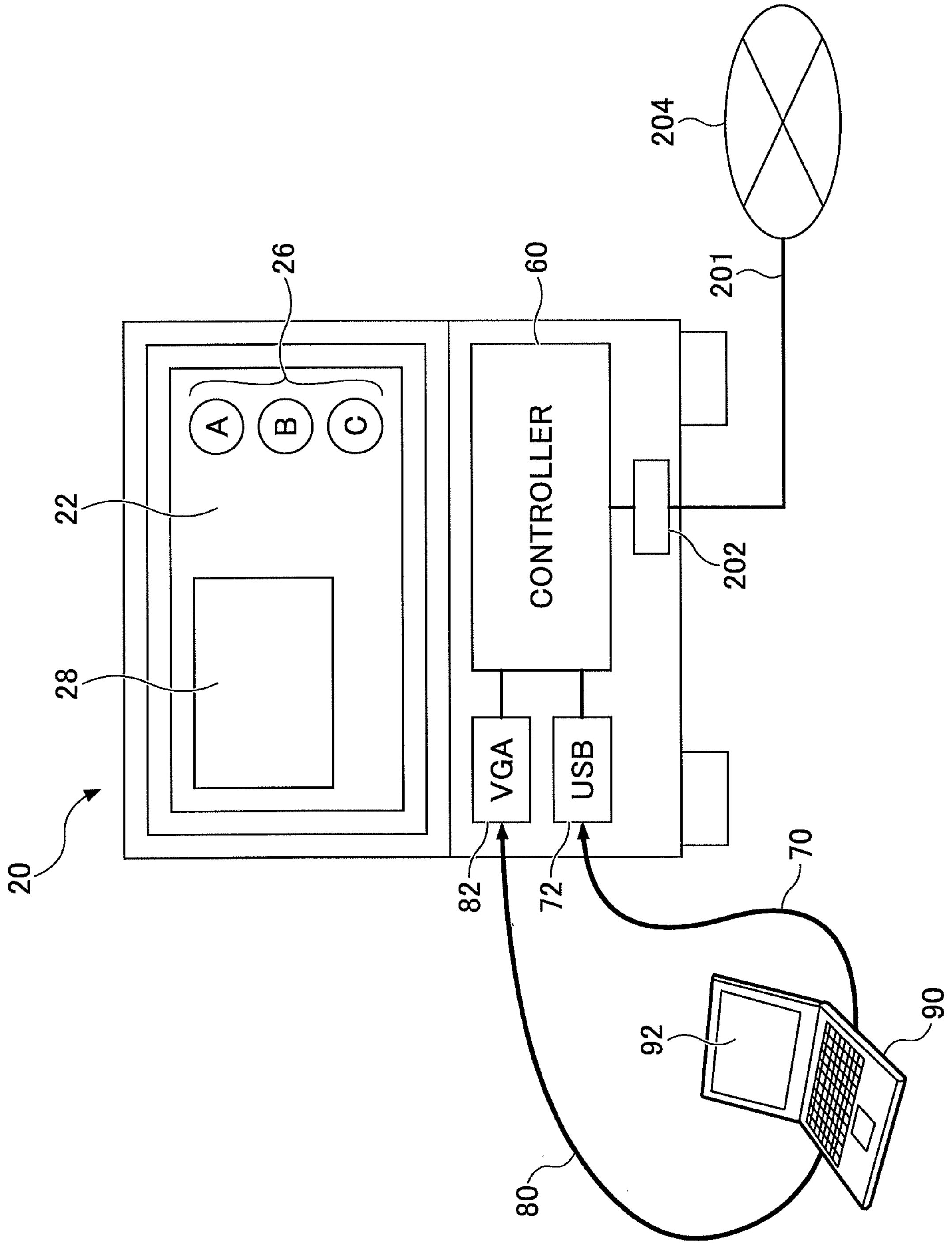
20
22
28
26
A
B
C
CONTROLLER
60
VGA
USB
82
72
70
80
90
92
201
202
204

FIG.8

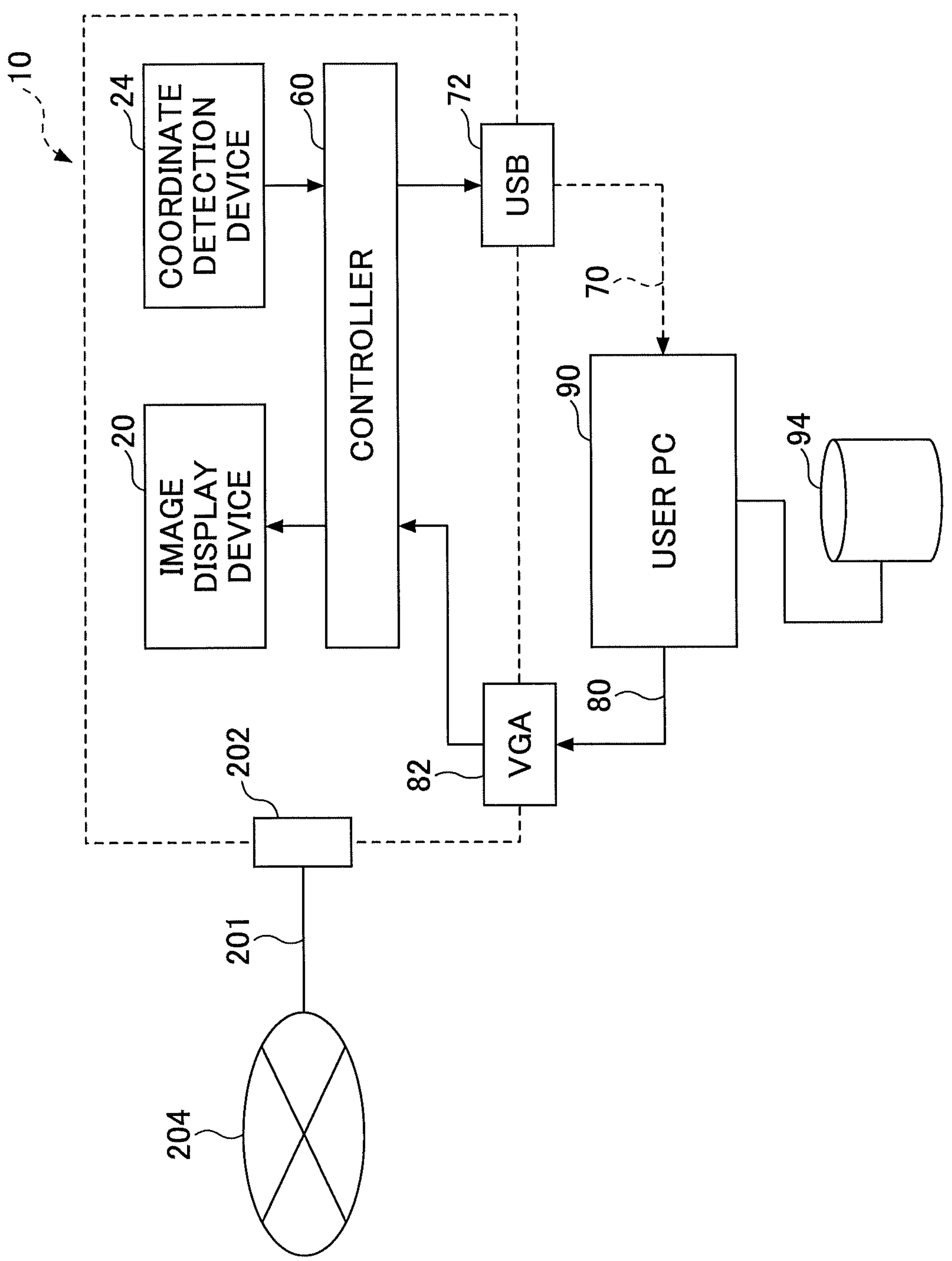
10
24
COORDINATE DETECTION DEVICE
60
CONTROLLER
72
USB
70
90
USER PC
94
20
IMAGE DISPLAY DEVICE
80
VGA
82
202
201
204

FIG.9

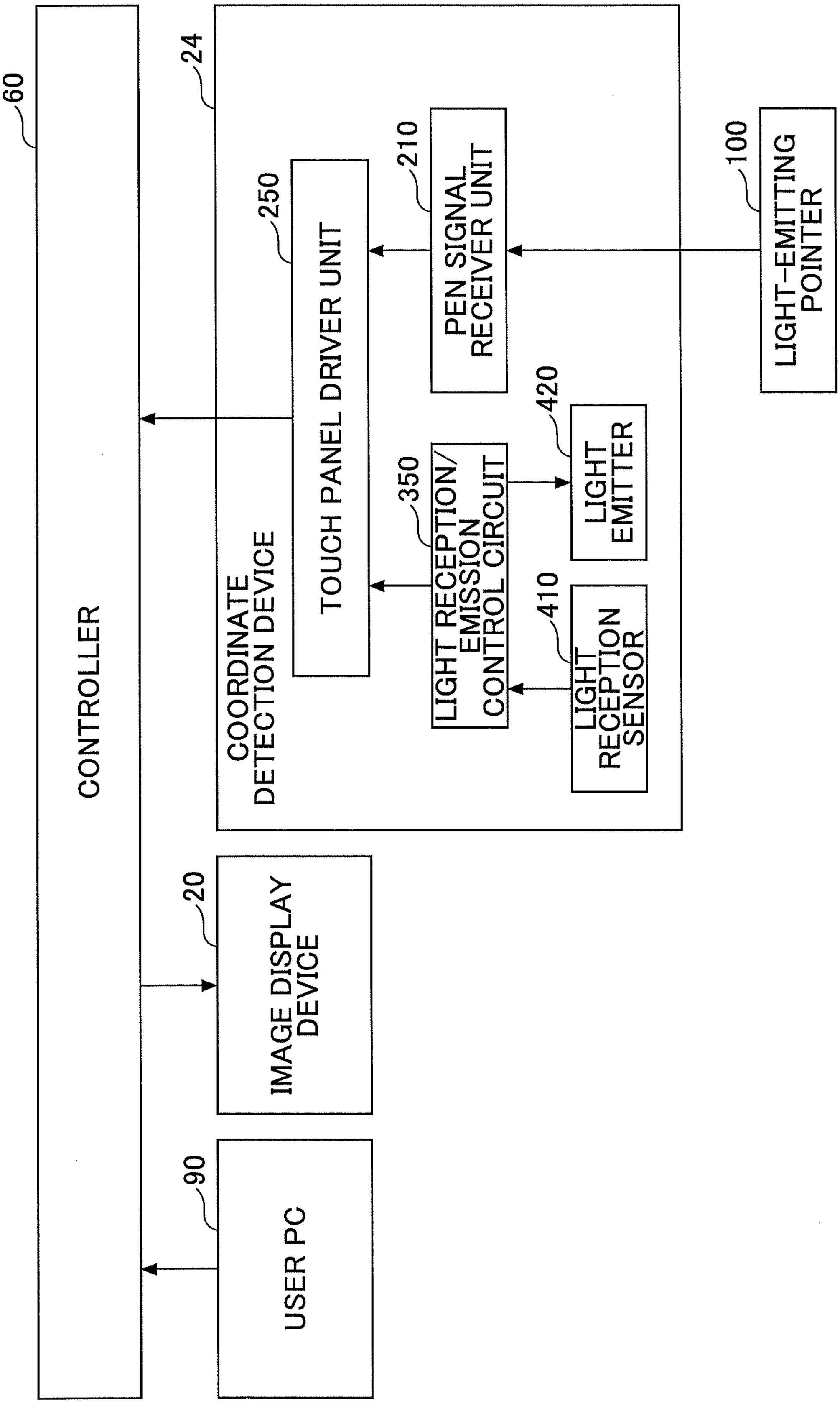
CONTROLLER
60
COORDINATE DETECTION DEVICE
24
TOUCH PANEL DRIVER UNIT
250
PEN SIGNAL RECEIVER UNIT
210
LIGHT RECEPTION/ EMISSION CONTROL CIRCUIT
350
LIGHT EMITTER
420
LIGHT RECEPTION SENSOR
410
LIGHT-EMITTING POINTER
100
IMAGE DISPLAY DEVICE
20
USER PC
90

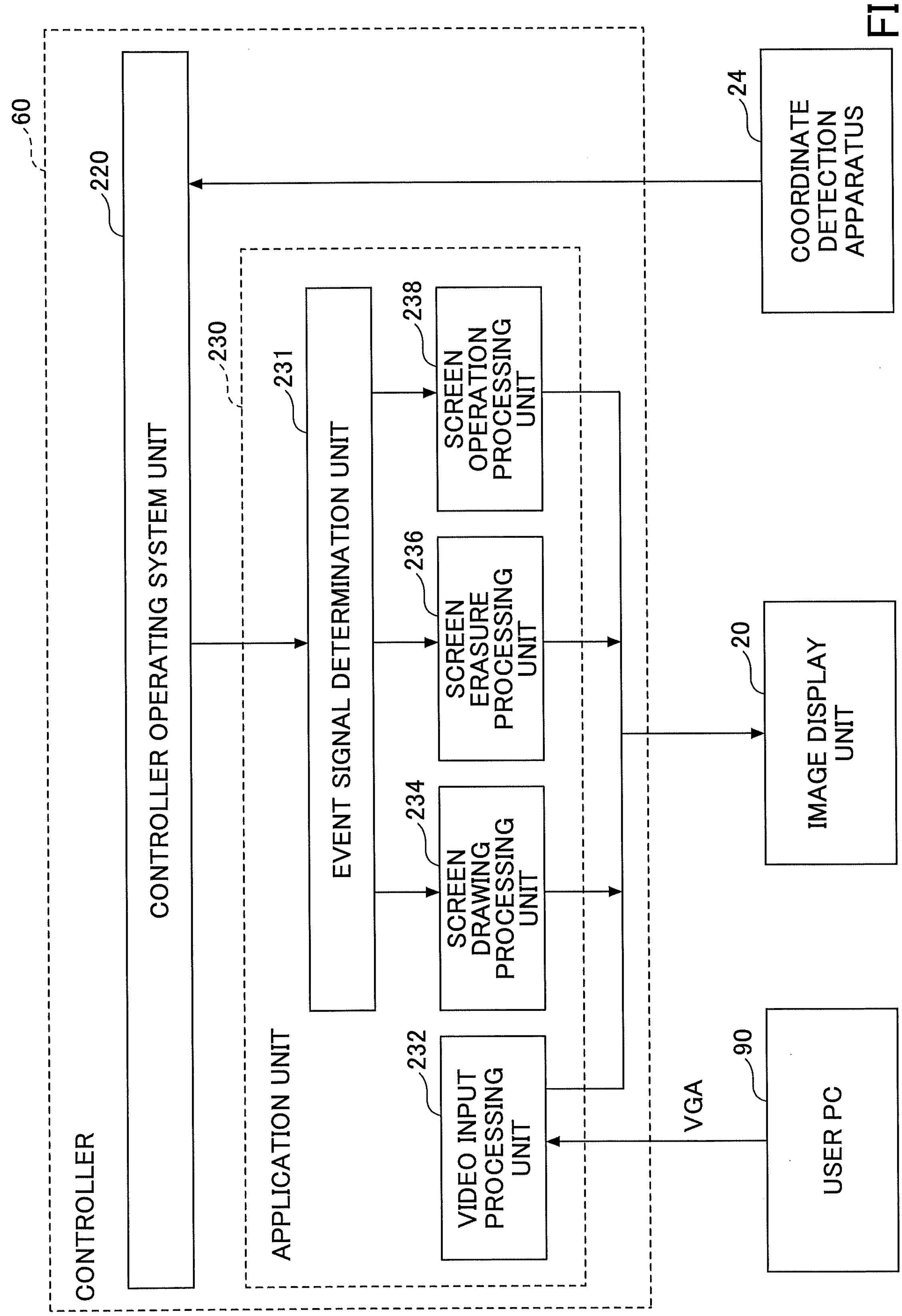
60
CONTROLLER
220
CONTROLLER OPERATING SYSTEM UNIT
230
APPLICATION UNIT
231
EVENT SIGNAL DETERMINATION UNIT
232
VIDEO INPUT PROCESSING UNIT
234
SCREEN DRAWING PROCESSING UNIT
236
SCREEN ERASURE PROCESSING UNIT
238
SCREEN OPERATION PROCESSING UNIT
24
COORDINATE DETECTION APPARATUS
20
IMAGE DISPLAY UNIT
90
USER PC
VGA

FIG.10

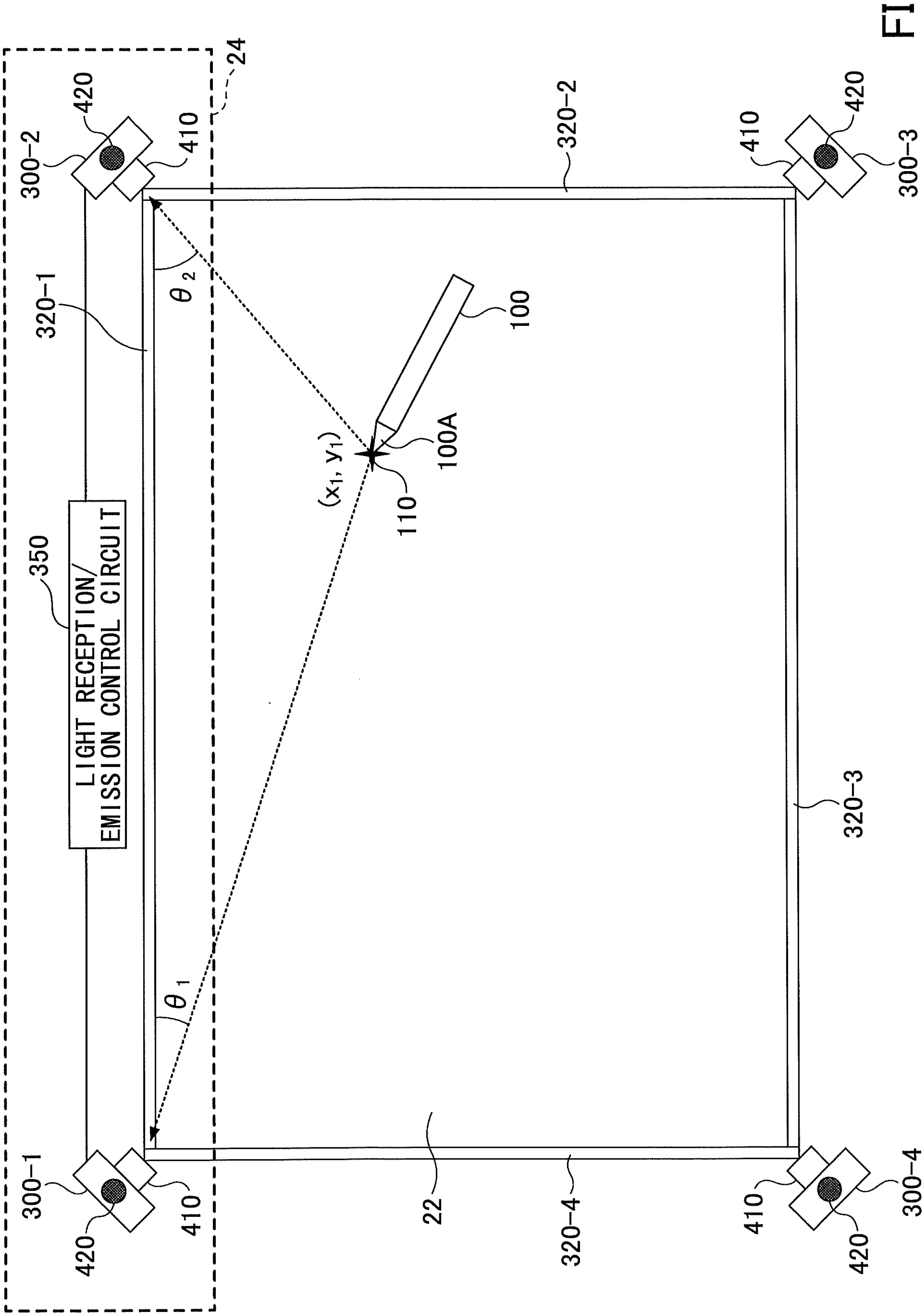

24
300-1
300-2
300-3
300-4
410
420
320-1
320-2
320-3
320-4
350
LIGHT RECEPTION/
EMISSION CONTROL CIRCUIT
θ 1
θ 2
100
100A
110
(x1, y1)
22


FIG.11

FIG.12A

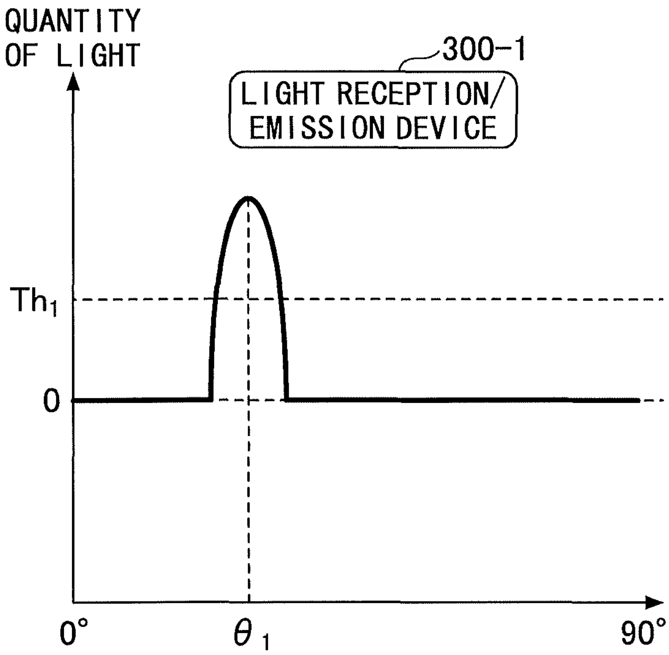


FIG.12B

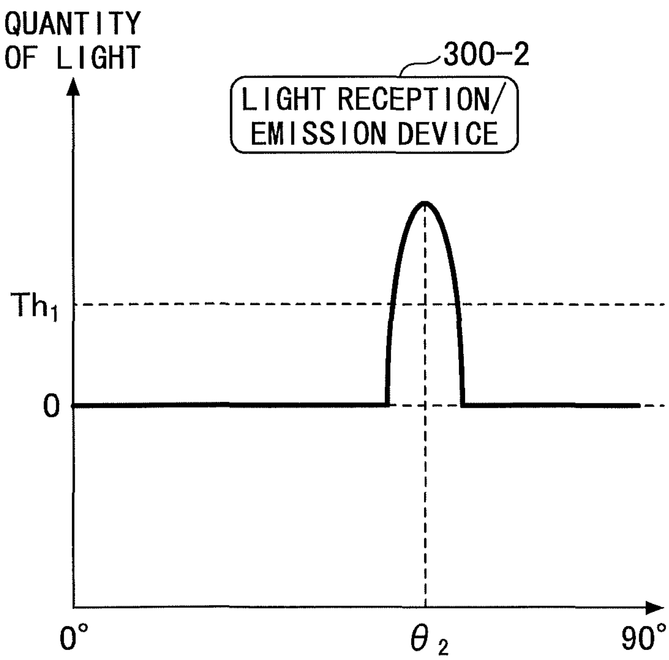

FIG.13

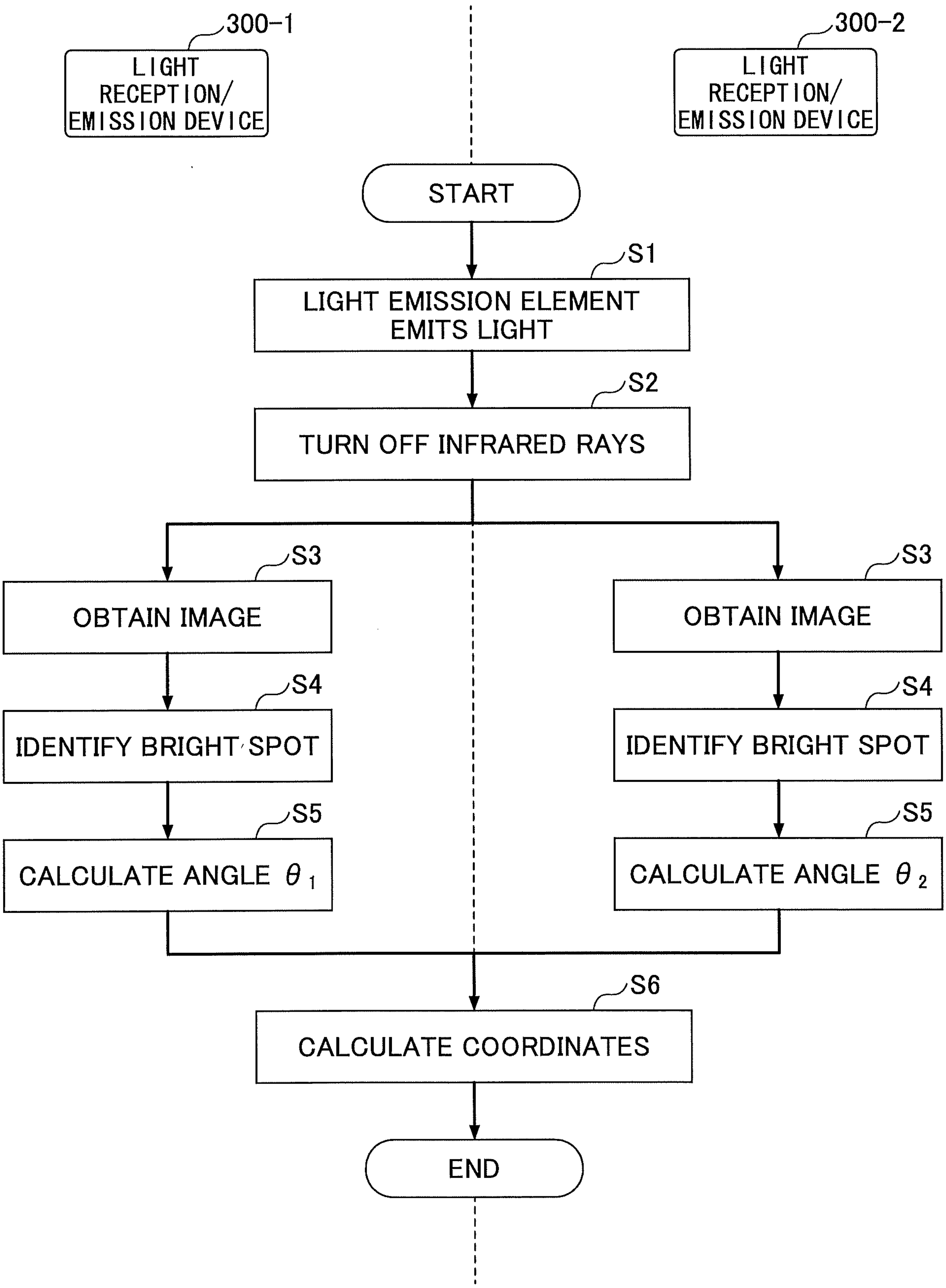
300-1
LIGHT RECEPTION/ EMISSION DEVICE
300-2
LIGHT RECEPTION/ EMISSION DEVICE
START
S1
LIGHT EMISSION ELEMENT EMITS LIGHT
S2
TURN OFF INFRARED RAYS
S3
OBTAIN IMAGE
S4
IDENTIFY BRIGHT SPOT
S5
CALCULATE ANGLE $\theta_1$
S3
OBTAIN IMAGE
S4
IDENTIFY BRIGHT SPOT
S5
CALCULATE ANGLE $\theta_2$
S6
CALCULATE COORDINATES
END

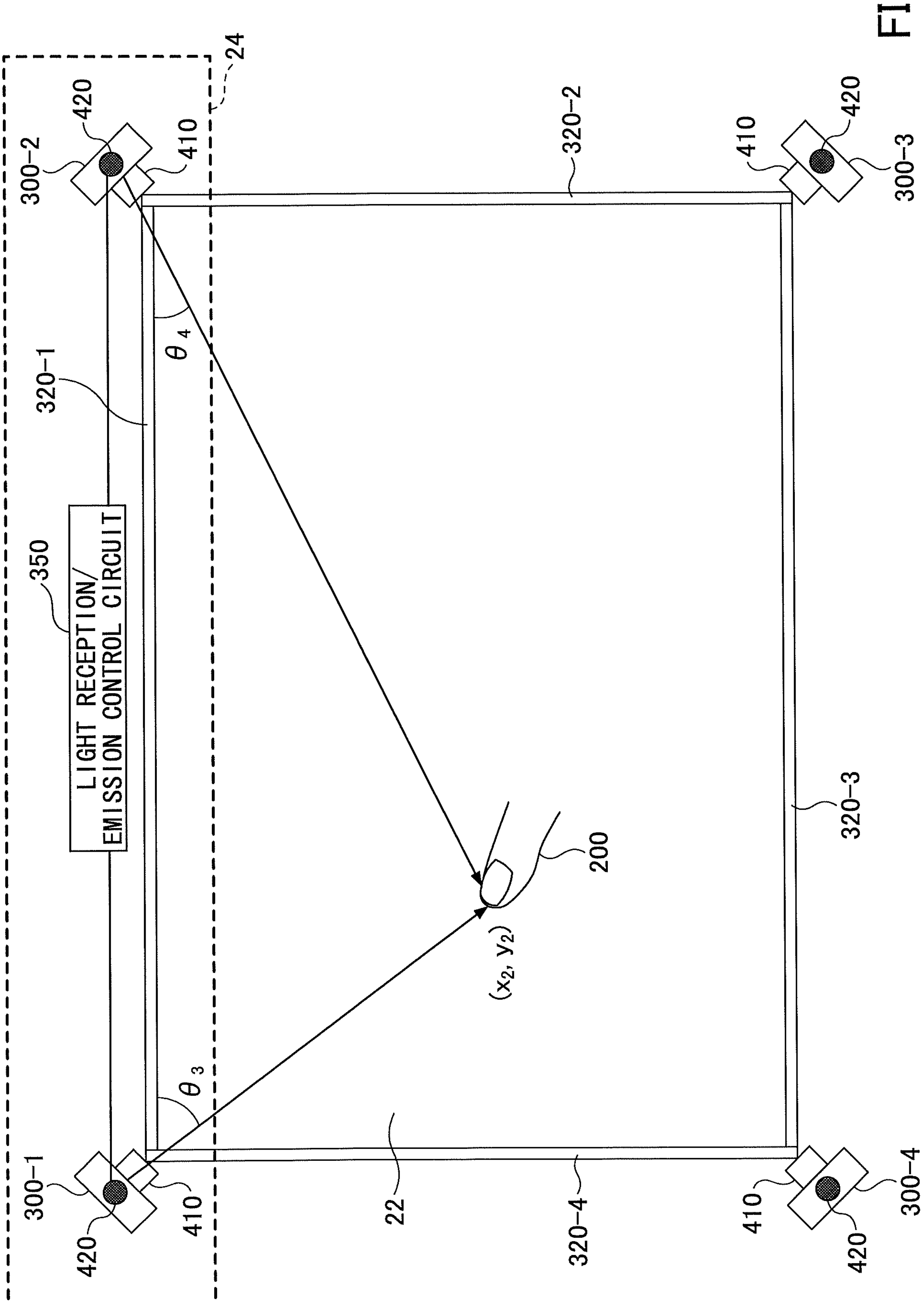
24
300-2
420
410
320-2
410
420
300-3
320-1
θ4
350
LIGHT RECEPTION/
EMISSION CONTROL CIRCUIT
200
(x2, y2)
320-3
θ3
300-1
420
410
22
320-4
410
420
300-4

FIG.14

FIG.15A

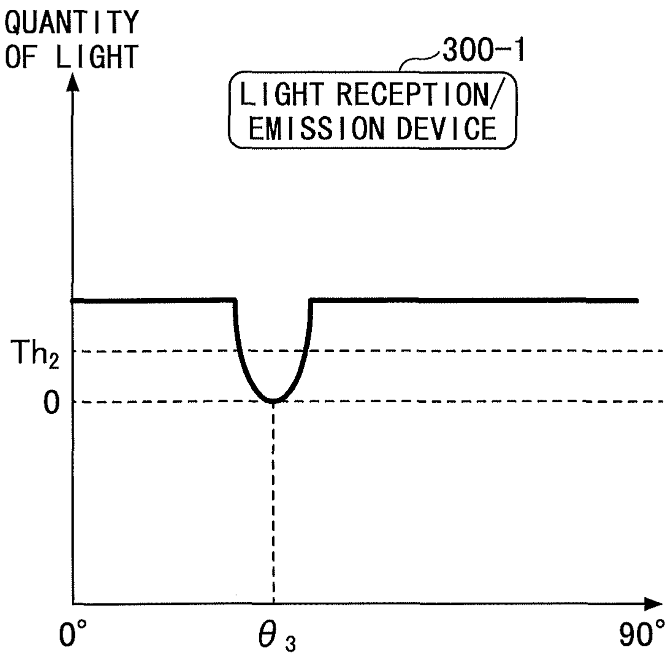


FIG.15B

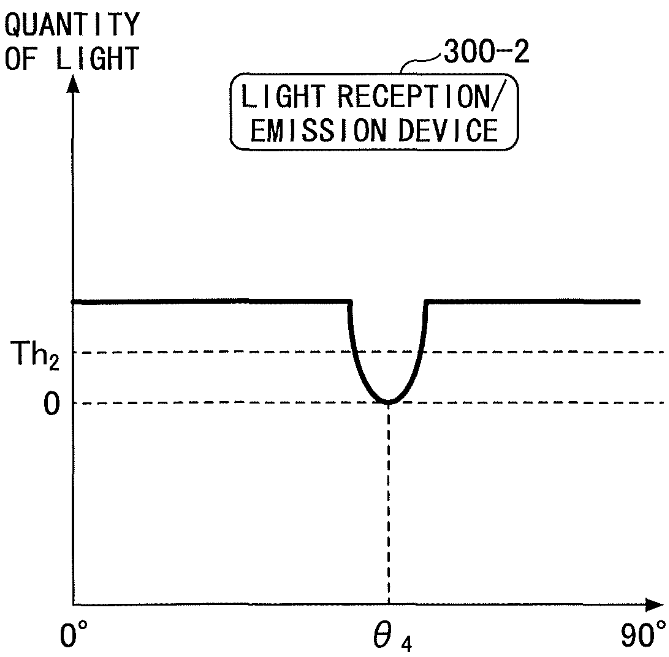

FIG.16

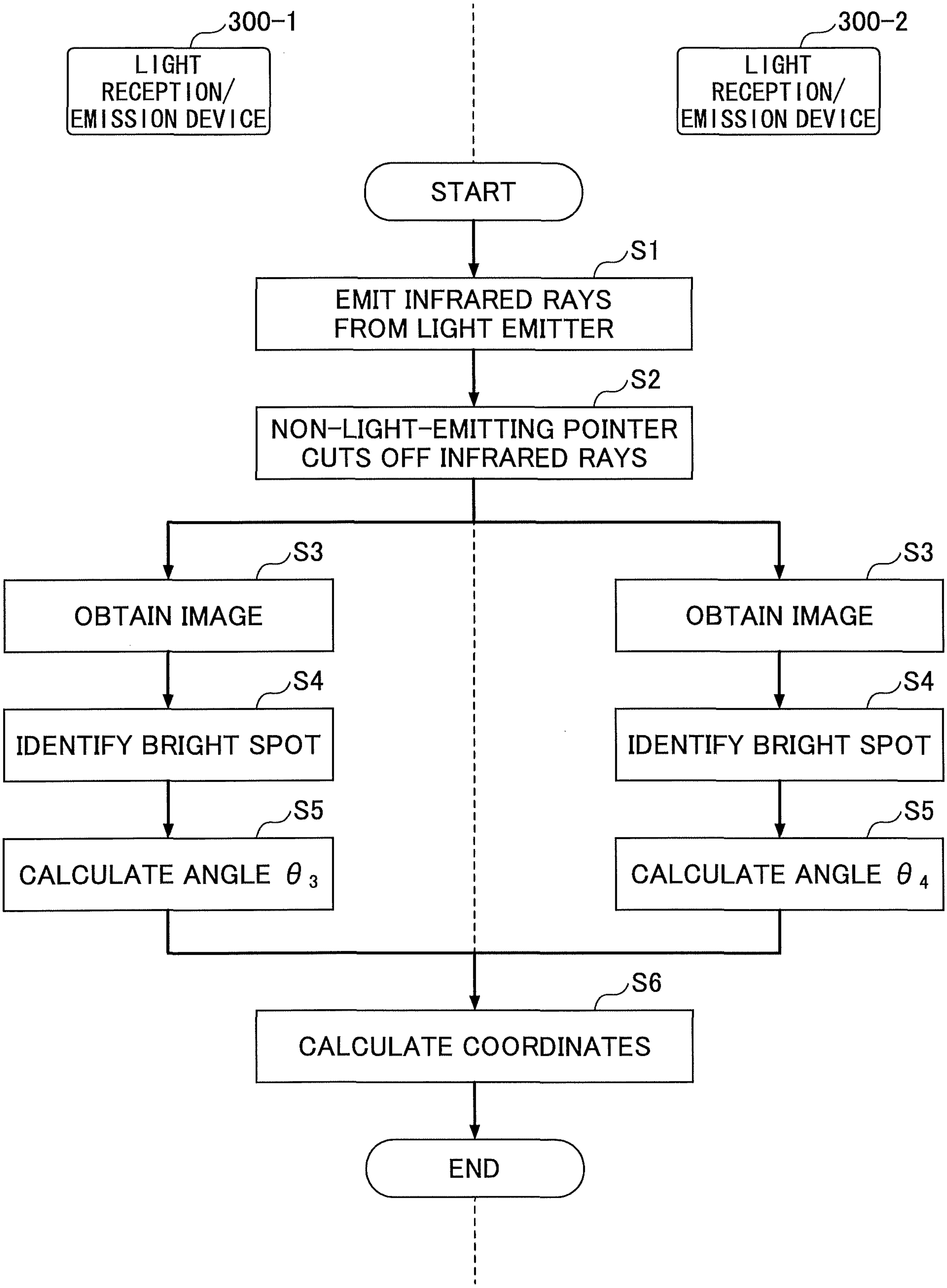
300-1
LIGHT RECEPTION/ EMISSION DEVICE
300-2
LIGHT RECEPTION/ EMISSION DEVICE
START
S1
EMIT INFRARED RAYS FROM LIGHT EMITTER
S2
NON-LIGHT-EMITTING POINTER CUTS OFF INFRARED RAYS
S3
OBTAIN IMAGE
S3
OBTAIN IMAGE
S4
IDENTIFY BRIGHT SPOT
S4
IDENTIFY BRIGHT SPOT
S5
CALCULATE ANGLE θ3
S5
CALCULATE ANGLE θ4
S6
CALCULATE COORDINATES
END

FIG.17

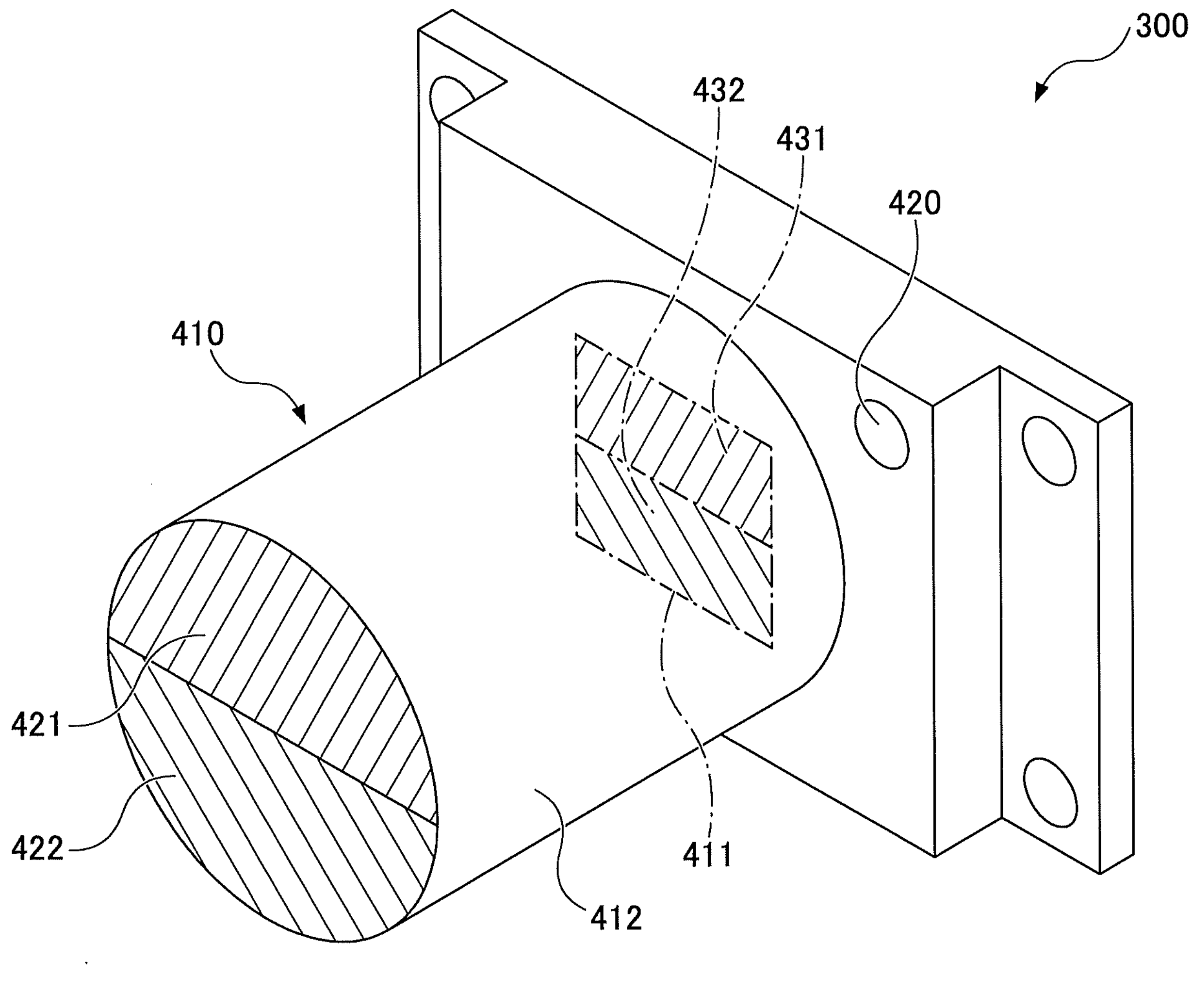

FIG.18A

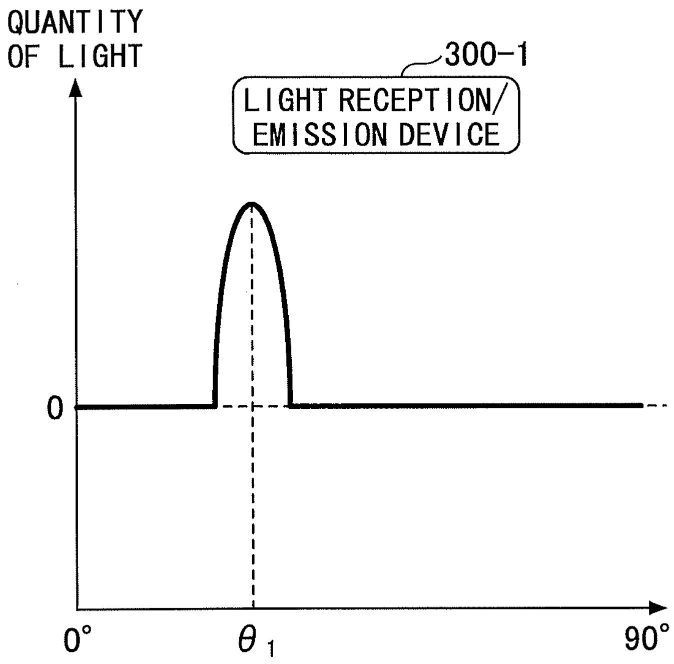


FIG.18B

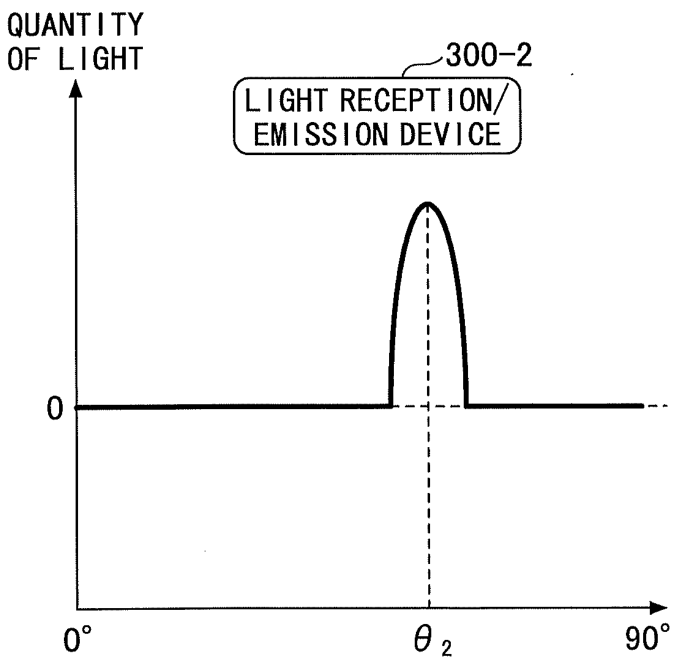

FIG.18C

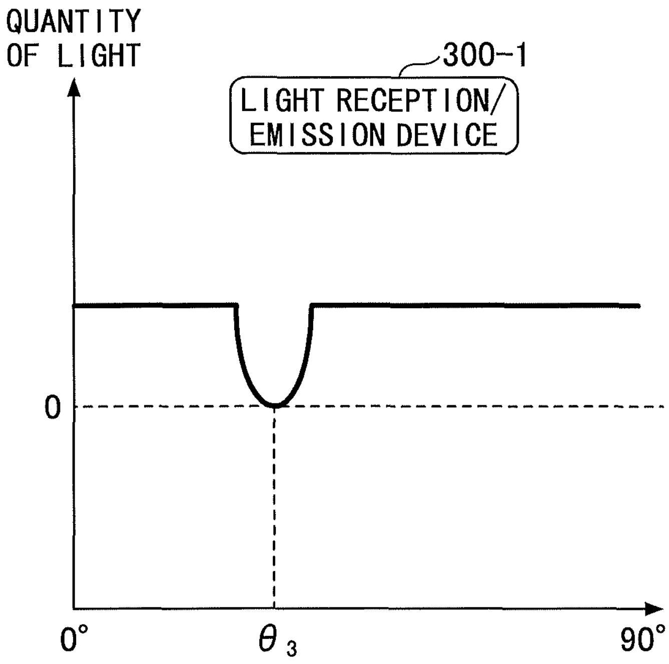


FIG.18D

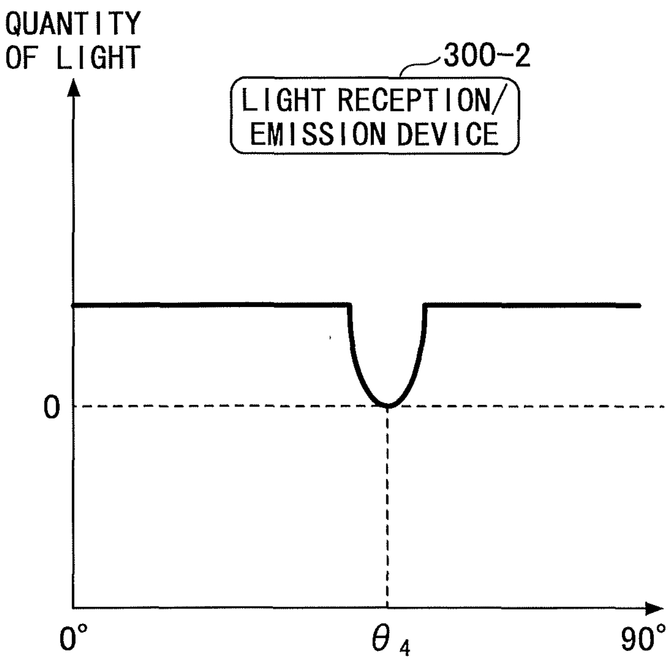

FIG.19

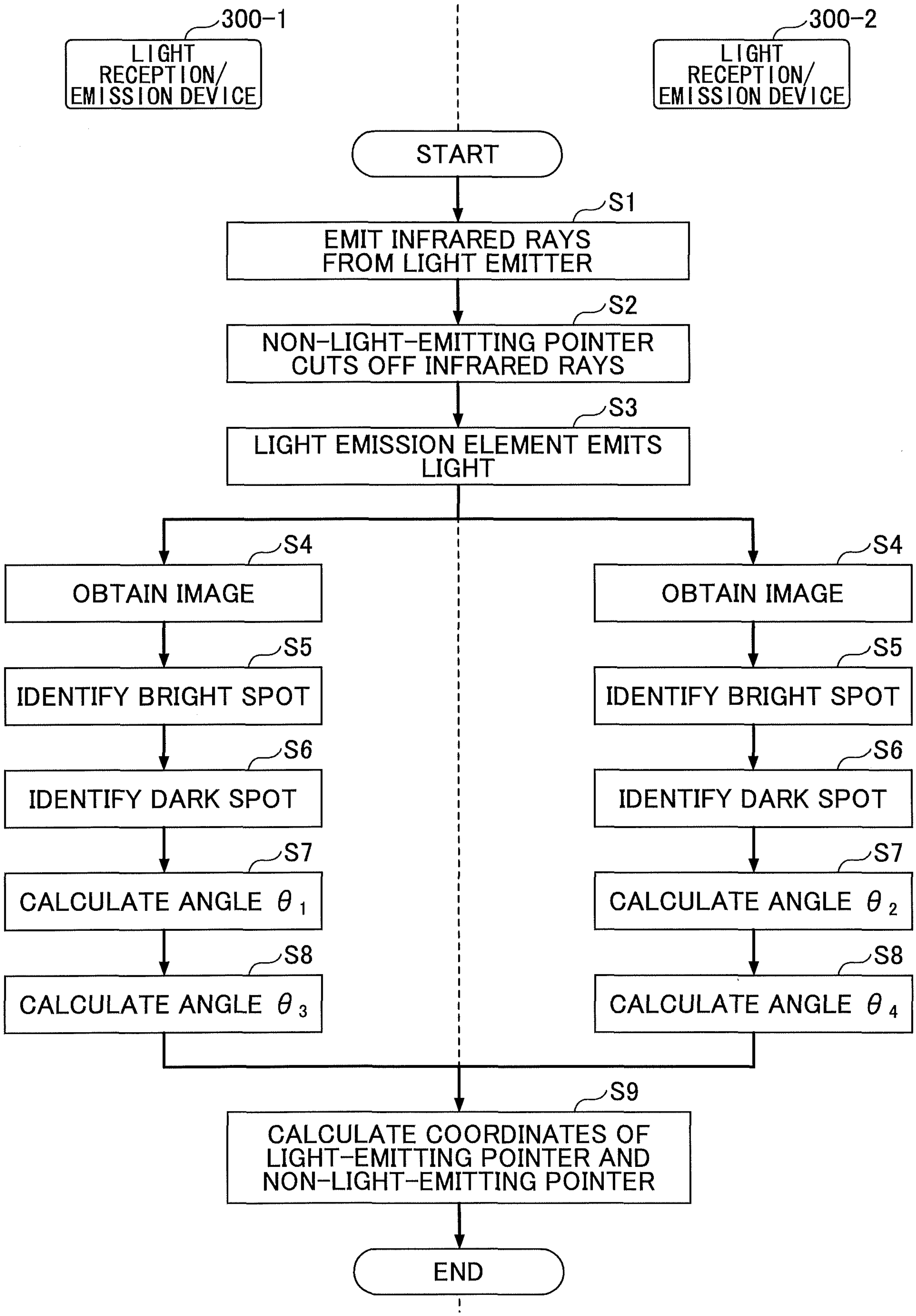
300-1
LIGHT RECEPTION/ EMISSION DEVICE
300-2
LIGHT RECEPTION/ EMISSION DEVICE
START
S1
EMIT INFRARED RAYS FROM LIGHT EMITTER
S2
NON-LIGHT-EMITTING POINTER CUTS OFF INFRARED RAYS
S3
LIGHT EMISSION ELEMENT EMITS LIGHT
S4
OBTAIN IMAGE
S5
IDENTIFY BRIGHT SPOT
S6
IDENTIFY DARK SPOT
S7
CALCULATE ANGLE θ1
S8
CALCULATE ANGLE θ3
S4
OBTAIN IMAGE
S5
IDENTIFY BRIGHT SPOT
S6
IDENTIFY DARK SPOT
S7
CALCULATE ANGLE θ2
S8
CALCULATE ANGLE θ4
S9
CALCULATE COORDINATES OF LIGHT-EMITTING POINTER AND NON-LIGHT-EMITTING POINTER
END

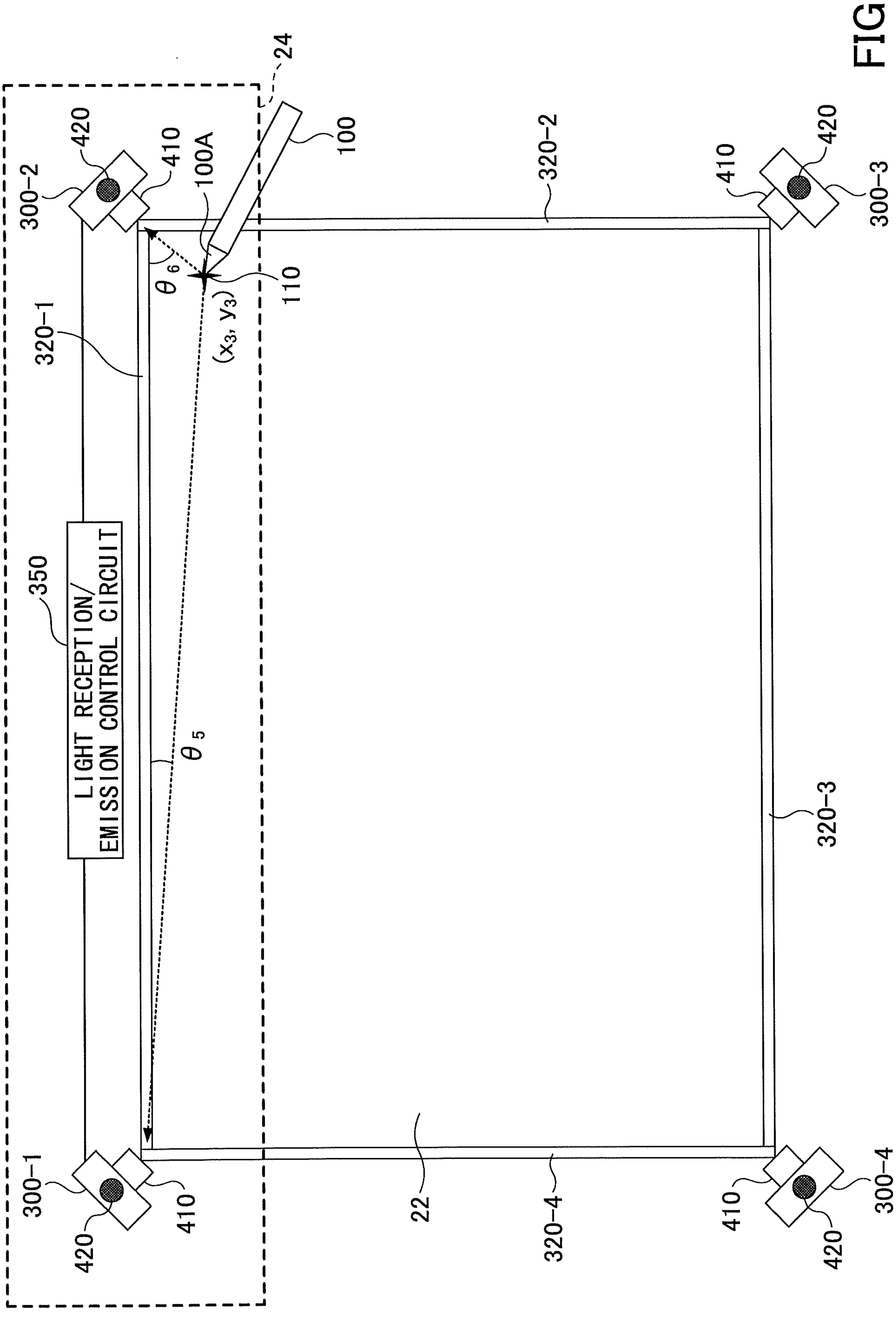
LIGHT RECEPTION/
EMISSION CONTROL CIRCUIT
350
24
100
100A
110
(x3, y3)
θ6
θ5
300-1
300-2
300-3
300-4
410
420
320-1
320-2
320-3
320-4
22

FIG.20

FIG.21A

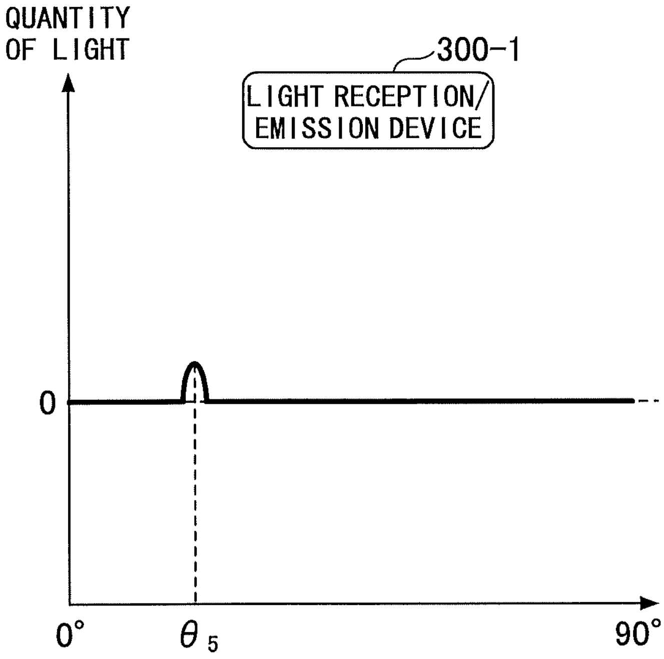


FIG.21B

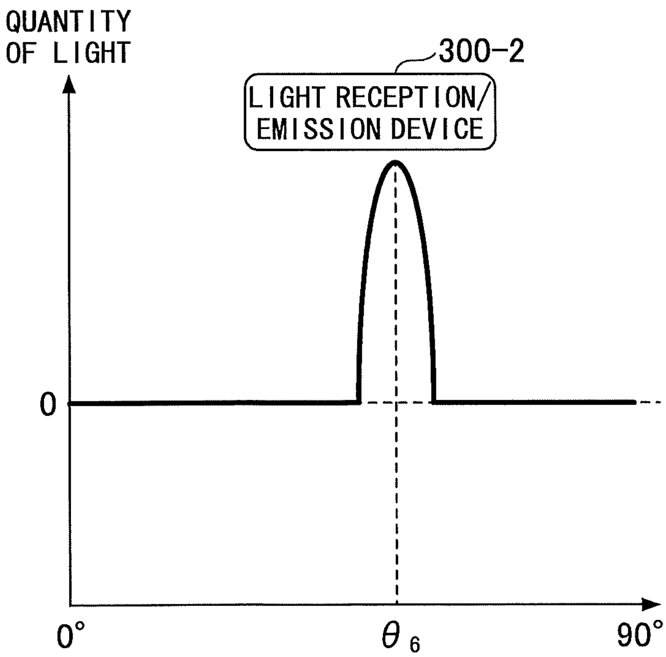

FIG.22A

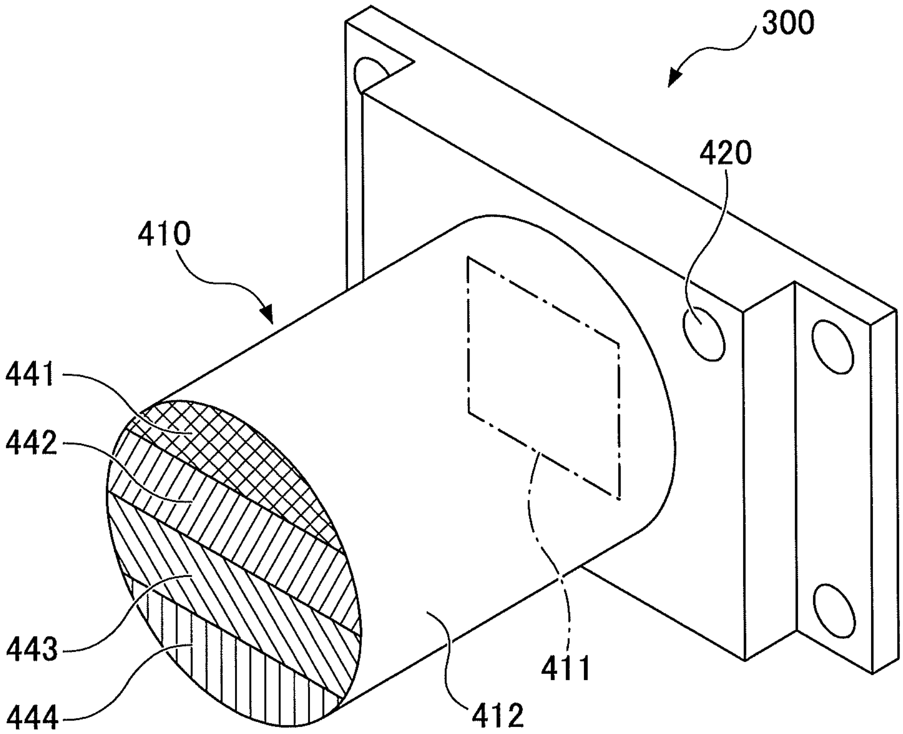


FIG.22B

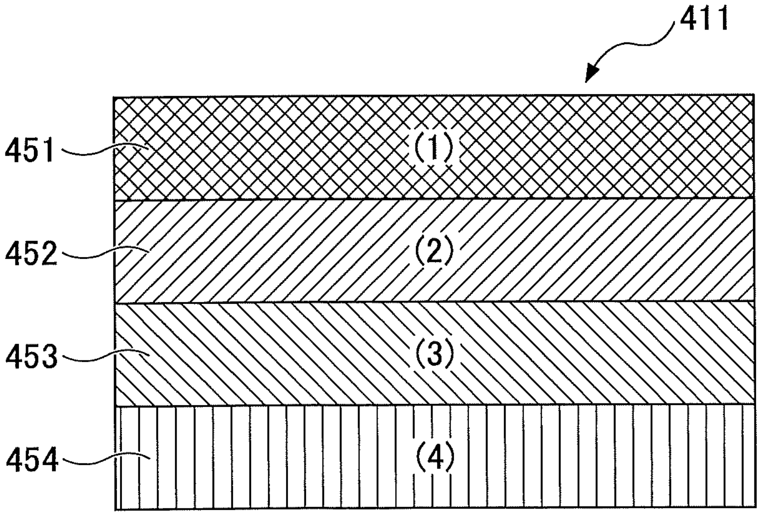

FIG.22C

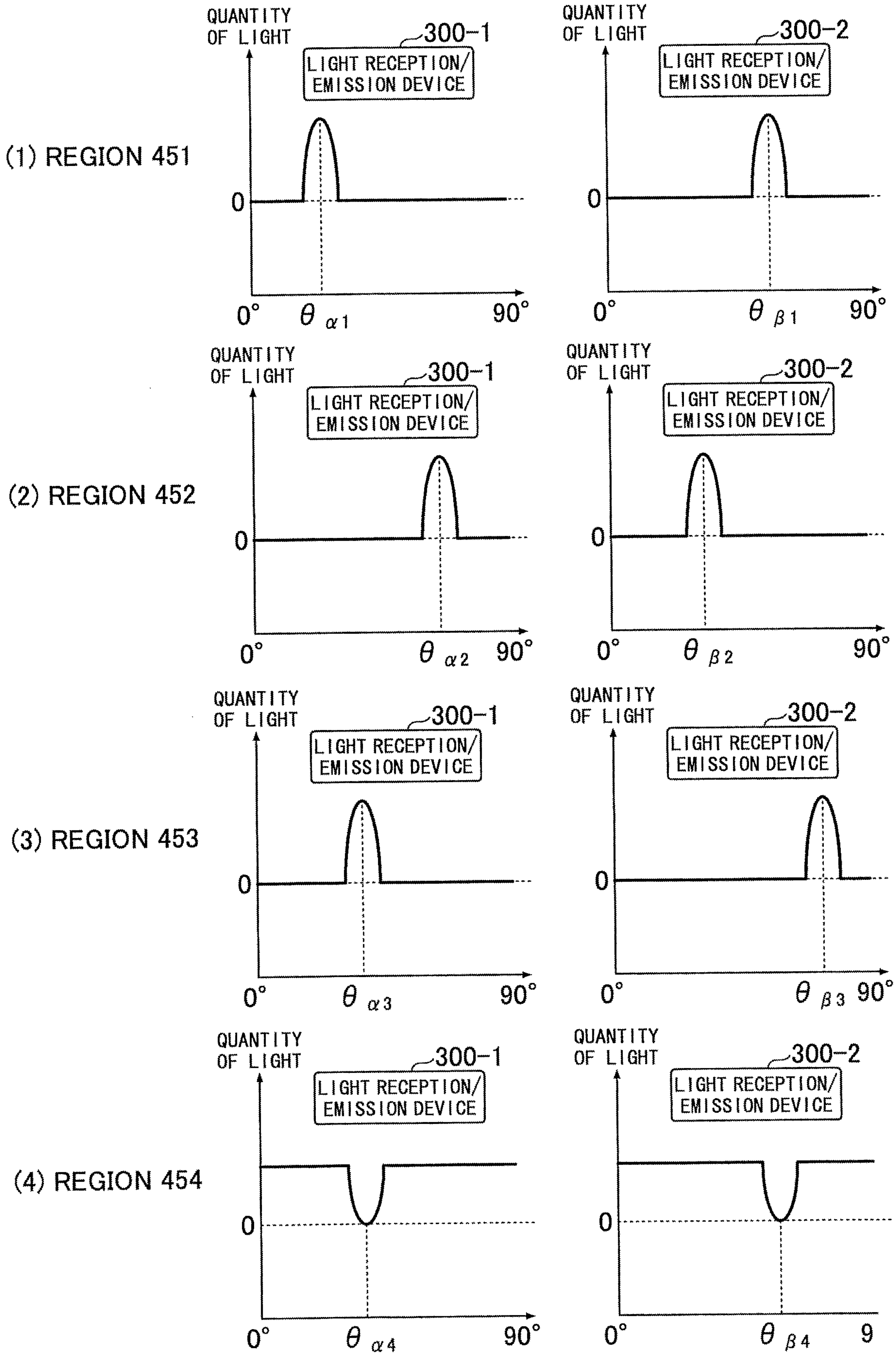
(1) REGION 451
QUANTITY OF LIGHT
300-1
LIGHT RECEPTION/ EMISSION DEVICE
0
0°
θ α1
90°
QUANTITY OF LIGHT
300-2
LIGHT RECEPTION/ EMISSION DEVICE
0
0°
θ β1
90°
(2) REGION 452
QUANTITY OF LIGHT
300-1
LIGHT RECEPTION/ EMISSION DEVICE
0
0°
θ α2
90°
QUANTITY OF LIGHT
300-2
LIGHT RECEPTION/ EMISSION DEVICE
0
0°
θ β2
90°
(3) REGION 453
QUANTITY OF LIGHT
300-1
LIGHT RECEPTION/ EMISSION DEVICE
0
0°
θ α3
90°
QUANTITY OF LIGHT
300-2
LIGHT RECEPTION/ EMISSION DEVICE
0
0°
θ β3
90°
(4) REGION 454
QUANTITY OF LIGHT
300-1
LIGHT RECEPTION/ EMISSION DEVICE
0
0°
θ α4
90°
QUANTITY OF LIGHT
300-2
LIGHT RECEPTION/ EMISSION DEVICE
0
0°
θ β4
9

FIG.23

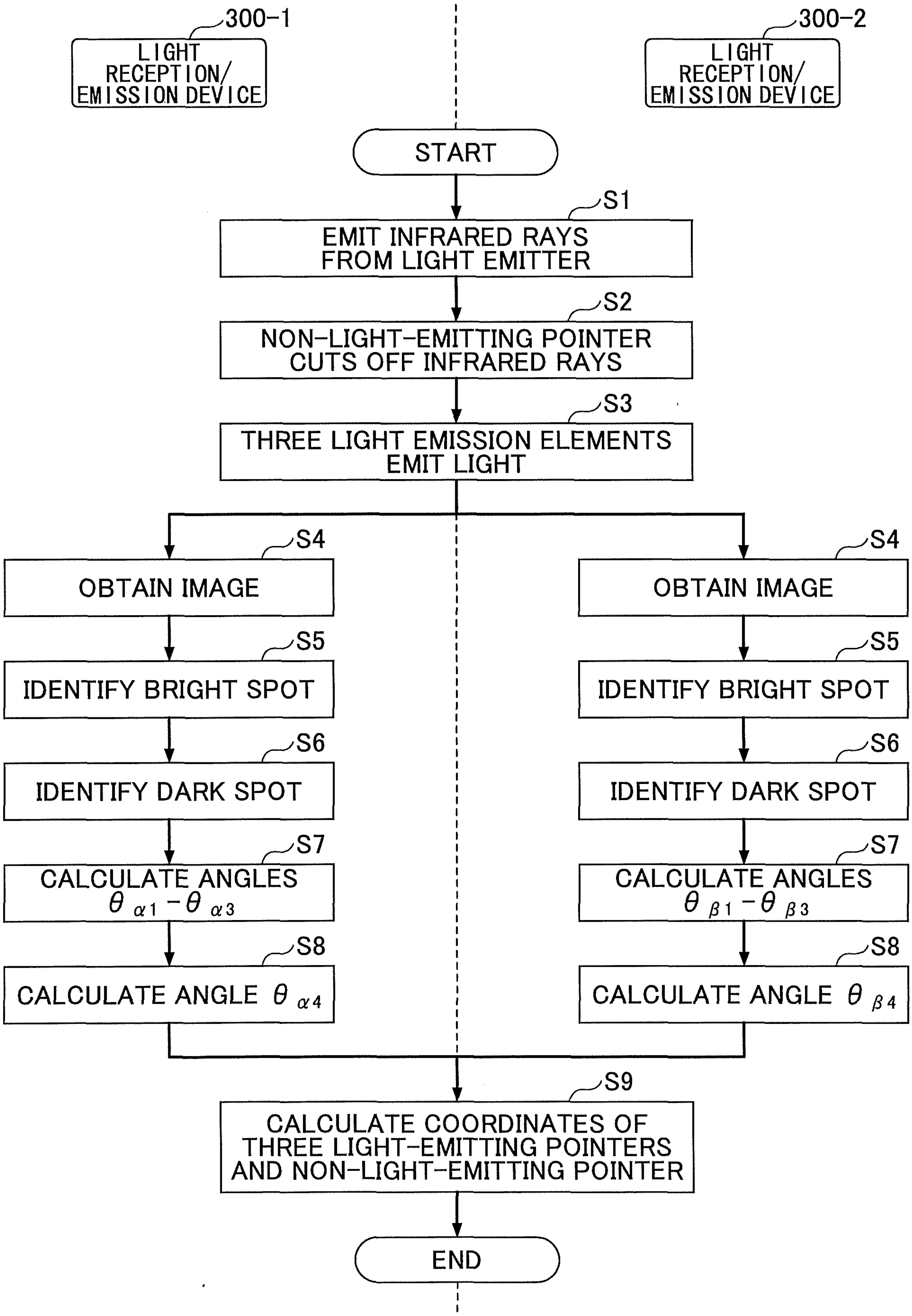
300-1
LIGHT RECEPTION/ EMISSION DEVICE
300-2
LIGHT RECEPTION/ EMISSION DEVICE
START
S1
EMIT INFRARED RAYS FROM LIGHT EMITTER
S2
NON-LIGHT-EMITTING POINTER CUTS OFF INFRARED RAYS
S3
THREE LIGHT EMISSION ELEMENTS EMIT LIGHT
S4
OBTAIN IMAGE
S5
IDENTIFY BRIGHT SPOT
S6
IDENTIFY DARK SPOT
S7
CALCULATE ANGLES $\theta_{\alpha 1}-\theta_{\alpha 3}$
S8
CALCULATE ANGLE $\theta_{\alpha 4}$
S4
OBTAIN IMAGE
S5
IDENTIFY BRIGHT SPOT
S6
IDENTIFY DARK SPOT
S7
CALCULATE ANGLES $\theta_{\beta 1}-\theta_{\beta 3}$
S8
CALCULATE ANGLE $\theta_{\beta 4}$
S9
CALCULATE COORDINATES OF THREE LIGHT-EMITTING POINTERS AND NON-LIGHT-EMITTING POINTER
END

FIG.24

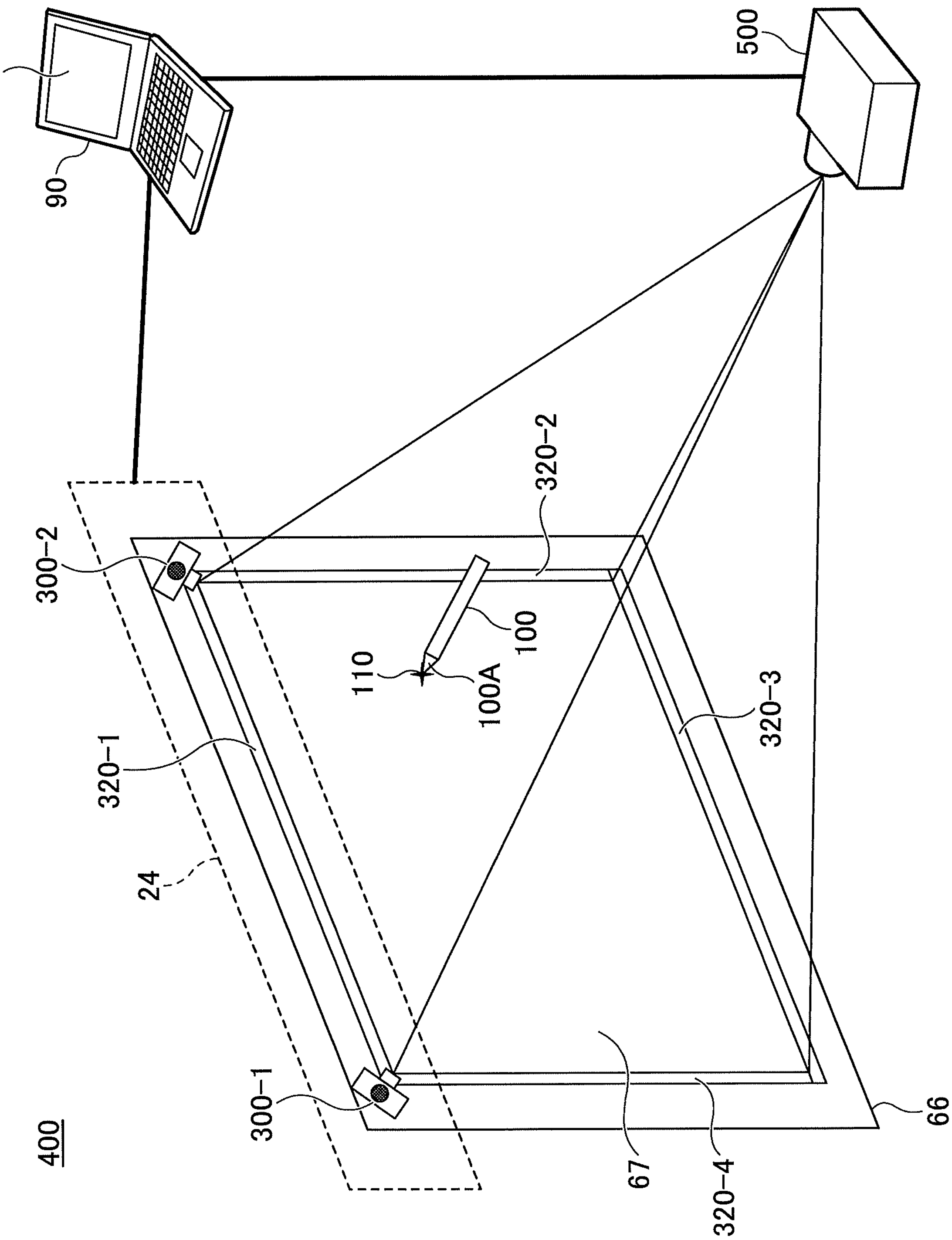
400
90
92
500
24
300-1
300-2
320-1
320-2
320-3
320-4
100
100A
110
66
67

# FIG.25

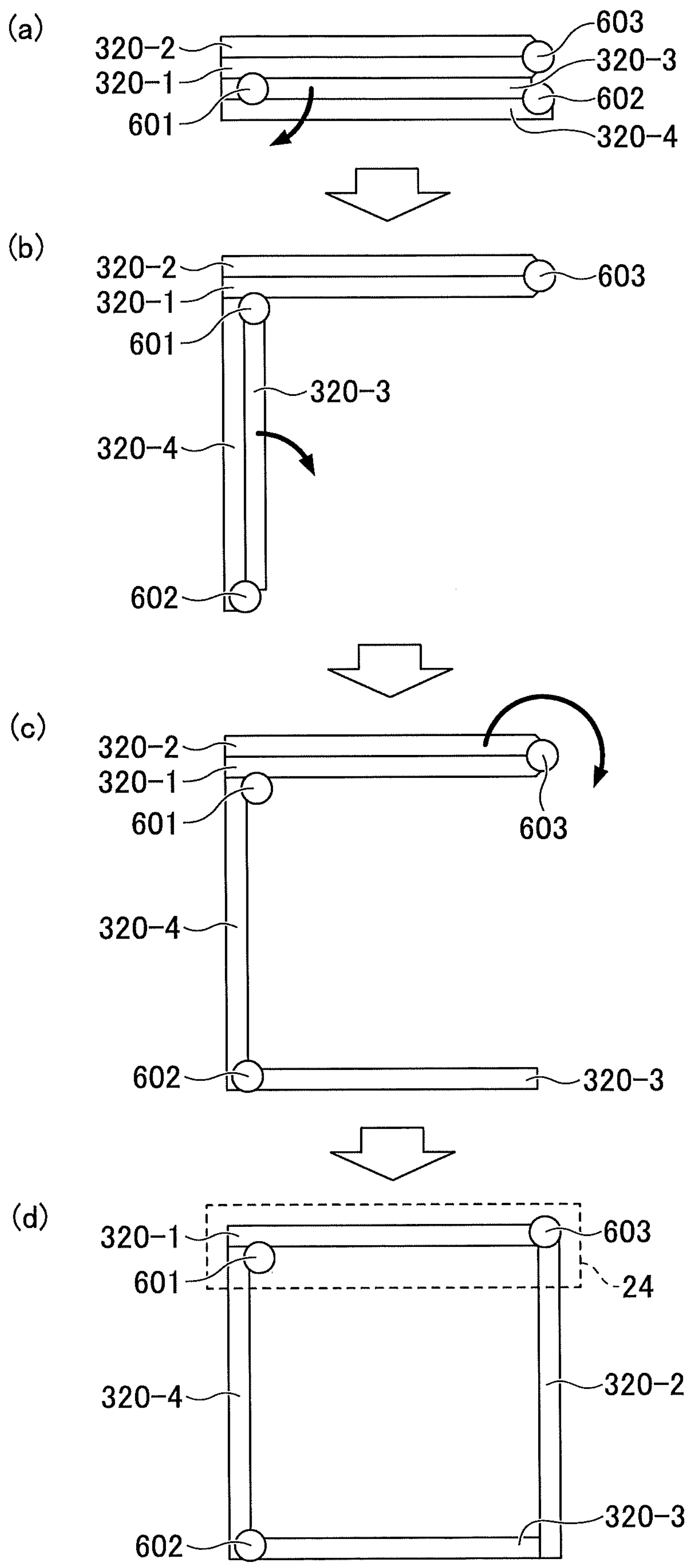
(a)
320-2
320-1
601
603
320-3
602
320-4
(b)
320-2
320-1
601
603
320-3
320-4
602
(c)
320-2
320-1
601
603
320-4
602
320-3
(d)
320-1
601
603
24
320-4
320-2
320-3
602

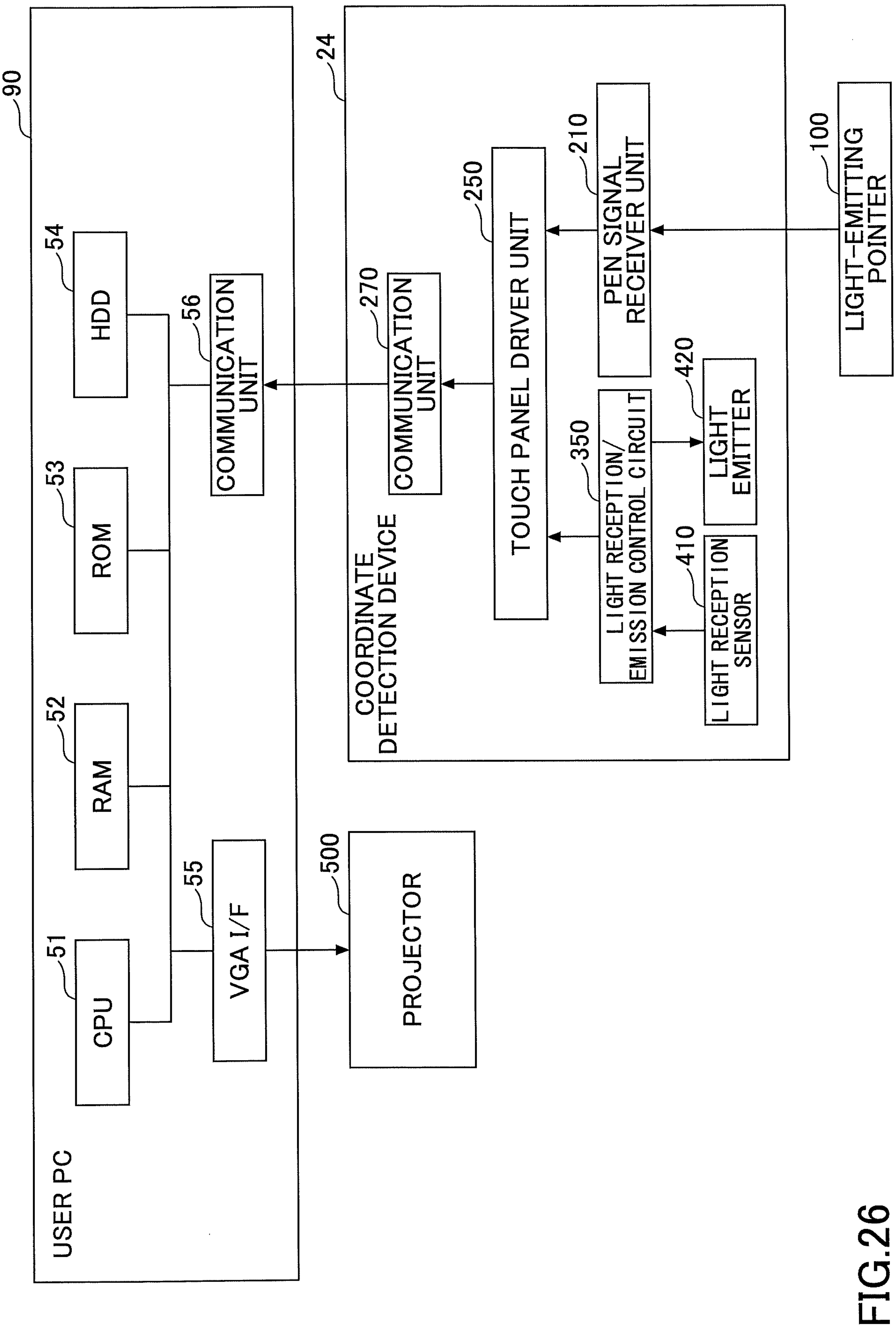

90
USER PC
51
CPU
52
RAM
53
ROM
54
HDD
55
VGA I/F
56
COMMUNICATION UNIT
500
PROJECTOR
24
COORDINATE DETECTION DEVICE
270
COMMUNICATION UNIT
250
TOUCH PANEL DRIVER UNIT
210
PEN SIGNAL RECEIVER UNIT
350
LIGHT RECEPTION/ EMISSION CONTROL CIRCUIT
410
LIGHT RECEPTION SENSOR
420
LIGHT EMITTER
100
LIGHT-EMITTING POINTER


FIG.26

FIG.27

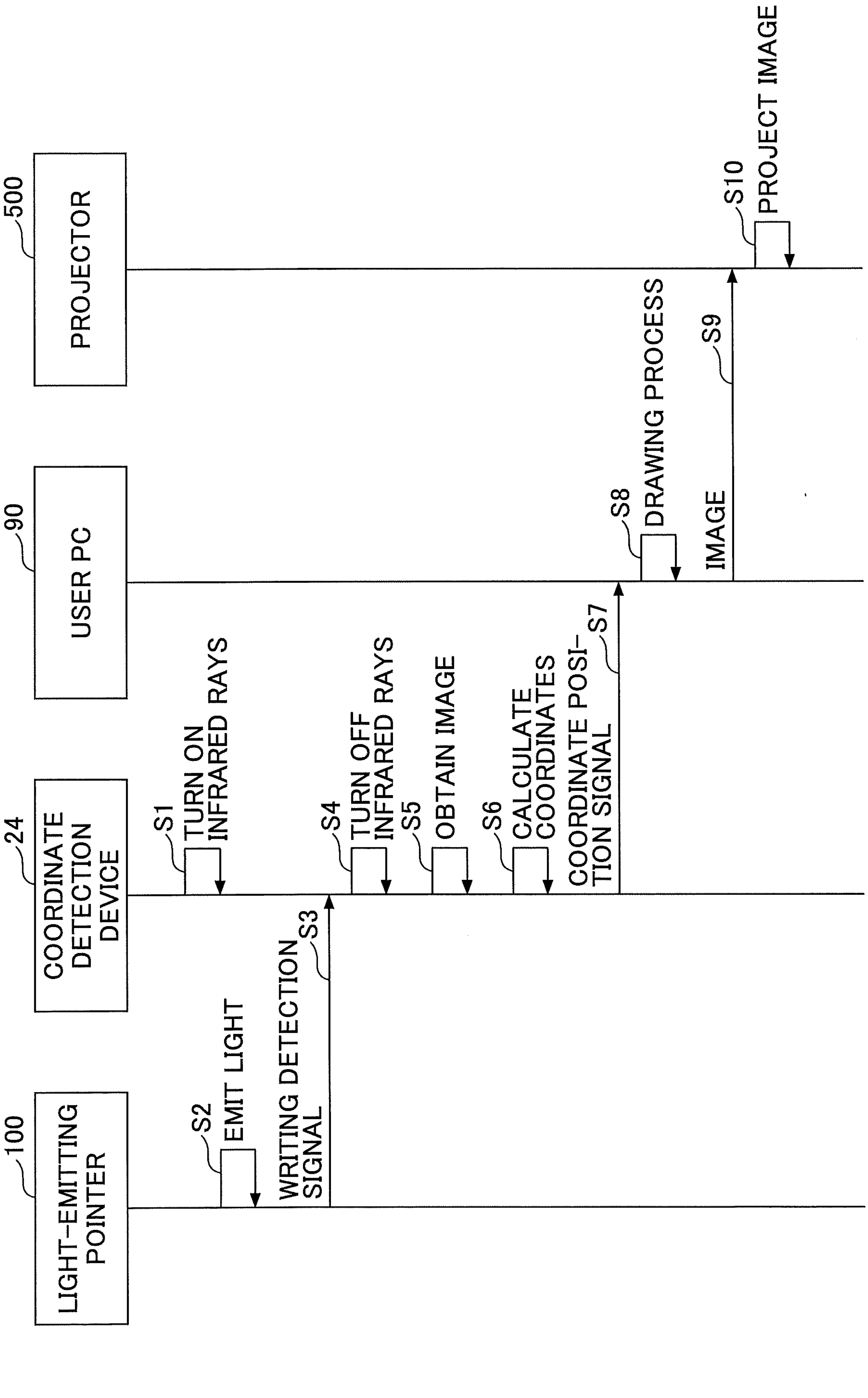
100
LIGHT-EMITTING POINTER
24
COORDINATE DETECTION DEVICE
90
USER PC
500
PROJECTOR
S1
TURN ON INFRARED RAYS
S2
EMIT LIGHT
S3
WRITING DETECTION SIGNAL
S4
TURN OFF INFRARED RAYS
S5
OBTAIN IMAGE
S6
CALCULATE COORDINATES
S7
COORDINATE POSITION SIGNAL
S8
DRAWING PROCESS
S9
IMAGE
S10
PROJECT IMAGE

FIG.28

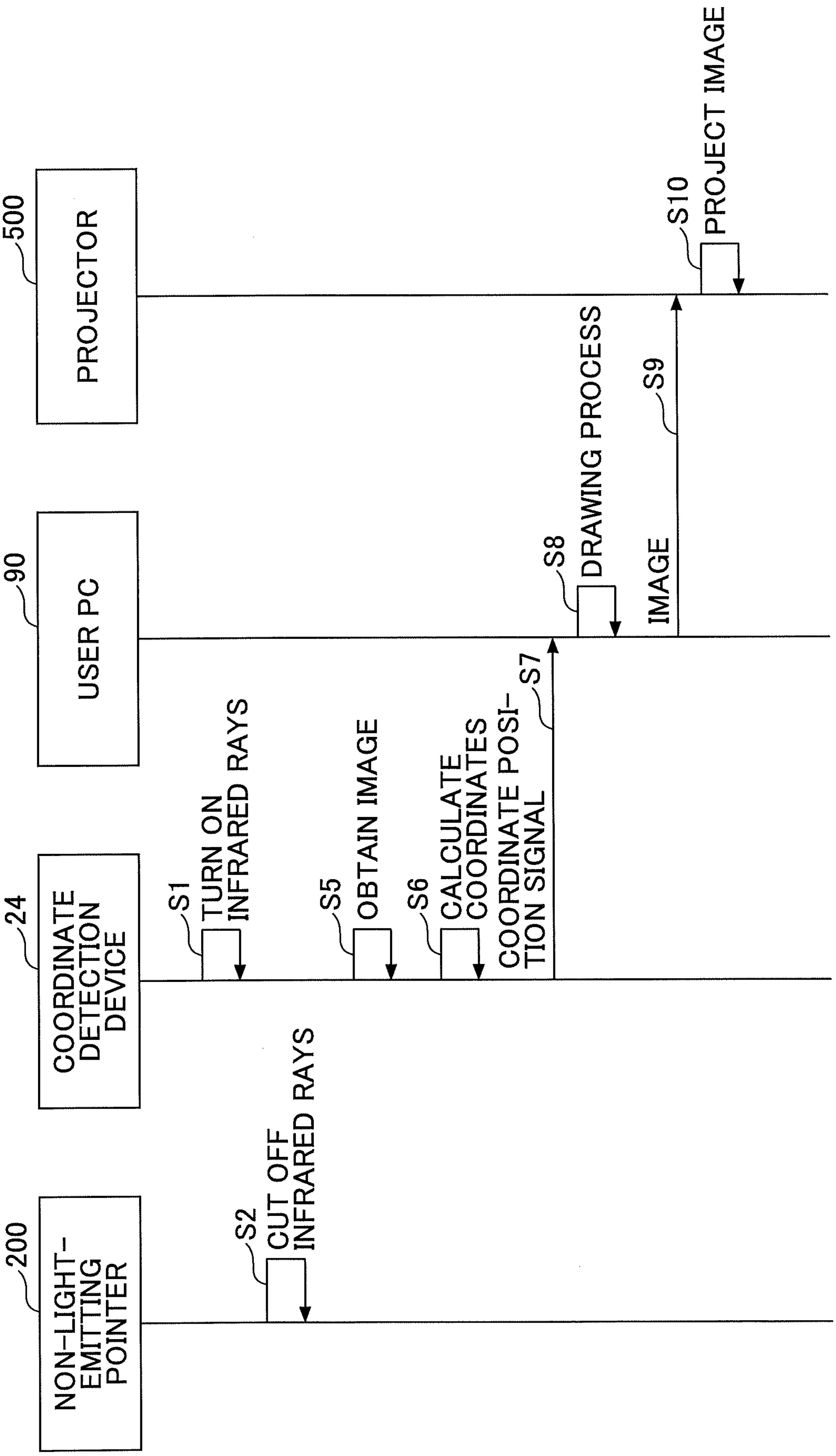
200
NON-LIGHT-EMITTING POINTER
24
COORDINATE DETECTION DEVICE
90
USER PC
500
PROJECTOR
S1
TURN ON INFRARED RAYS
S2
CUT OFF INFRARED RAYS
S5
OBTAIN IMAGE
S6
CALCULATE COORDINATES
S7
COORDINATE POSITION SIGNAL
S8
DRAWING PROCESS
S9
IMAGE
S10
PROJECT IMAGE

## INTERNATIONAL SEARCH REPORT

International application No.
PCT/JP2016/062505

A. CLASSIFICATION OF SUBJECT MATTER
*G06F3/042*(2006.01)i

According to International Patent Classification (IPC) or to both national classification and IPC

B. FIELDS SEARCHED

Minimum documentation searched (classification system followed by classification symbols)
G06F3/042

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2016 |
| Kokai Jitsuyo Shinan Koho | 1971-2016 | Toroku Jitsuyo Shinan Koho | 1994-2016 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | JP 2015-56112 A (Ricoh Co., Ltd.), 23 March 2015 (23.03.2015), paragraphs [0002], [0017] to [0036], [0110] to [0112]; fig. 1, 2, 16 & US 2015/0077763 A1 paragraphs [0004], [0053] to [0072], [0147] to [0149]; fig. 1, 2, 16 | 1,2,5,9-11<br>3,4,6-8 |
| P,Y | JP 2016-38902 A (Ricoh Co., Ltd.), 22 March 2016 (22.03.2016), paragraphs [0006] to [0010]; fig. 22, 23 & US 2016/0041632 A1 paragraphs [0009] to [0012]; fig. 22, 23 | 3,4,8 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 27 June 2016 (27.06.16) | 05 July 2016 (05.07.16) |

| Name and mailing address of the ISA/ | Authorized officer |
|---|---|
| Japan Patent Office<br>3-4-3,Kasumigaseki,Chiyoda-ku,<br>Tokyo 100-8915,Japan | Telephone No. |

Form PCT/ISA/210 (second sheet) (January 2015)

**INTERNATIONAL SEARCH REPORT**

International application No.
PCT/JP2016/062505

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2014-99139 A (Sharp Corp.), 29 May 2014 (29.05.2014), paragraphs [0064], [0078] to [0080]; fig. 1 (Family: none) | 6-8 |
| Y | JP 2003-256123 A (Ricoh Co., Ltd.), 10 September 2003 (10.09.2003), paragraphs [0022], [0060] (Family: none) | 7,8 |
| Y | JP 2011-138509 A (LG Display Co., Ltd.), 14 July 2011 (14.07.2011), paragraphs [0034], [0036]; fig. 3 & US 2011/0157044 A1 paragraphs [0047], [0049]; fig. 3 & EP 2339438 A2 & CN 102109932 A | 8 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2013175142 A
- JP 2015085954 A
- JP 2016083906 A